(19) Europäisches Patentamt
European Patent Office
Office européen des brevets

(11) **EP 3 835 899 A1**

(12) **EUROPÄISCHE PATENTANMELDUNG**

(43) Veröffentlichungstag:
**16.06.2021 Patentblatt 2021/24**

(51) Int Cl.:
***G05B 19/418*** *(2006.01)*

(21) Anmeldenummer: **19214378.2**

(22) Anmeldetag: **09.12.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(71) Anmelder: **Siemens Aktiengesellschaft
80333 München (DE)**

(72) Erfinder:
• **Schnittger, Jens
91475 Lonnerstadt (DE)**

• **Gross, Ralf
90471 Nürnberg (DE)**
• **Klos, Hans-Henning
91249 Weigendorf (DE)**
• **Kohler, Benjamin
90408 Nürnberg (DE)**
• **Lavrik, Vladimir
63303 Dreieich (DE)**
• **Riedl, Wolfgang
90443 Nürnberg (DE)**

(54) **VERFAHREN ZUR VORHERSAGE EINES STILLSTANDS, FRÜHWARNEINRICHTUNG, PRODUKTIONSANLAGE UND COMPUTERPROGRAMMPRODUKT**

(57) Verfahren zur Vorhersage eines Stillstands eines Aggregats MN von mehreren Aggregaten M1 - MN, wobei N ≥ 2, einer Produktionsanlage (10), insbesondere Abfüllanlage in der Lebensmittelindustrie, mit durch die Aggregate M1 - MN geförderten Materialeinheiten (12), insbesondere Flaschen, mit den Schritten:

a) Feststellen (S401) einer Eigenstörung eines Aggregats M1, und

b) Ermitteln (S402) des Zeitpunkts eines Eintretens $(t_N^{(\text{Beginn des Materialmangels})}, t_N^{(\text{Beginn der Materialflussblockade})})$ oder eines Verlängerns $(t_N^{(\text{Beginn des Verlängerns des Materialmangels})},$

$t_N^{(\text{Beginn des Verlängerns der Materialflussblockade})})$ eines Stillstands des Aggregats MN aufgrund eines Mangels an Materialeinheiten (12) oder einer Materialflussblockade als Folge der Eigenstörung des Aggregats M1.

Weiterhin werden eine Frühwarneinrichtung, eine Produktionsanlage und ein Computerprogrammprodukt bereitgestellt.

FIG 1

EP 3 835 899 A1

**Beschreibung**

Die vorliegende Erfindung betrifft ein Verfahren zur Vorhersage eines Stillstands, eine Frühwarneinrichtung, eine Produktionsanlage und ein Computerprogrammprodukt.

Heutige Produktionsanlagen (z.B. Abfüllanlagen in der Getränke- bzw. Lebensmittel-Industrie) zeichnen sich durch eine komplexe Anlagenstruktur aus. In solchen Anlagen kann es vorkommen, dass es zur Produktionszeit zu Störungen am durchsatzbegrenzenden Hauptaggregat kommt, deren Ursache nicht unmittelbar ersichtlich ist, weil sie nicht im Hauptaggregat selbst liegt. Um die Effizienz bzw. die Produktivität einer Anlage zu erhöhen, wird deshalb im Fehlerfall eine Root Cause Analyse (RCA) der Gesamtanlage durchgeführt. Hierbei wird versucht, die ursächliche Störung zu ermitteln, die zum Ausfall der Anlage geführt hat.

Vor diesem Hintergrund besteht eine Aufgabe der vorliegenden Erfindung darin, einen verbesserten Ansatz bereitzustellen.

Gemäß einem ersten Aspekt wird bereitgestellt ein Verfahren zur Vorhersage eines Stillstands eines Aggregats MN von mehreren Aggregaten M1 - MN, wobei $N \geq 2$, einer Produktionsanlage, insbesondere Abfüllanlage in der Lebensmittelindustrie, mit durch die Aggregate M1 - MN geförderten Materialeinheiten, insbesondere Flaschen, mit den Schritten:

a) Feststellen einer Eigenstörung eines Aggregats M1, und
b) Ermitteln des Zeitpunkts eines Eintretens oder eines Verlängerns eines Stillstands des Aggregats MN aufgrund eines Mangels an Materialeinheiten oder einer Materialflussblockade als Folge der Eigenstörung des Aggregats M1.

Durch das bereitgestellte Verfahren wird im Vergleich zur RCA in umgekehrter Richtung vorgegangen: Wenn ein Aggregat M1 in Störung geht, wird ermittelt, wann dies zu einem Stillstand des Aggregats MN (auch als Haupt- oder Bottleneck-Aggregat bezeichnet) führen wird, und es kann entsprechend reagiert werden, beispielsweise durch einen Eingriff seitens des Anlagenbetreibers. Dies ist von Bedeutung für die Erhöhung der ausfallfreien Zeit der Gesamtanlage und damit für die Erhöhung der Produktionseffizienz. Da viele Störungen vorübergehender Natur sind, ermöglicht die Vorhersage, einen optimalen Zwischenweg zu finden zwischen einer teuren und unnötigen sofortigen Behandlung aller Störungen und einem untätigen Abwarten, bis es zu spät für ein Eingreifen ist. Selbst in dem Fall, dass keine Verhinderung des Anlagenstillstands mehr möglich ist, bringt es Vorteile, sich wenigstens darauf einstellen zu können.

Begrifflich ist vorliegend eine Materialflussblockade (Engl.: tailback) von einem Rückstau zu unterscheiden. Eine Materialflussblockade an einem Aggregat bedeutet zunächst nur, dass das entsprechende Aggregat abschalten muss, weil es kein Material mehr ausstoßen kann, weil am Ausgang blockierendes Material steht, das sich nicht wegbewegt. Ein Rückstau führt hingegen zu keinem Abschalten des entsprechenden Aggregats; gemeint sind die normalen Verzögerungen im Materialfluss, beispielsweise weil Materialeinheiten lokal schneller zugeführt als abtransportiert werden.

Vorliegend werden stets miteinander verkettete Aggregate betrachtet, wobei auch Verzweigungen vorgesehen sein können. M1 meint nicht notwendigerweise das in Materialflussrichtung erste Aggregat einer solchen Kette von Aggregaten. Vielmehr ist M1 dasjenige Aggregat in der Kette, welches eine Eigenstörung aufweist. M1 kann in Materialflussrichtung vor oder hinter dem Aggregat MN liegen.

"Stillstand" heißt, dass das entsprechende Aggregat, insbesondere M1, keine Materialeinheiten ausstößt.

"Eigenstörung" heißt, dass das entsprechende Aggregat, insbesondere M1, einen Stillstand aufweist, weil es selbst gestört ist. Die Ursache dieser Störung liegt also nicht in einem anderen Aggregat. Ein Beispiel für eine solche Eigenstörung ist eine Flasche, die sich in dem entsprechenden Aggregat verklemmt hat und daher nicht weiterbewegt werden kann. Eine solche Eigenstörung kann beispielsweise mittels eines Sensors erfasst werden, der mit einer Steuereinrichtung der Produktionsanlage signaltechnisch verbunden ist.

Das Aggregat MN ist insbesondere das durchsatzbegrenzende Aggregat der Produktionsanlage. Es kann auch als Bottleneck-Aggregat bezeichnet werden.

Gemäß einer Ausführungsform wird der Zeitpunkt für das Eintreten des Stillstands des Aggregats MN in Abhängigkeit einer Durchsatzrate von Materialeinheiten des Aggregats M1 im Verhältnis zu einer Durchsatzrate von Materialeinheiten des Aggregats MN bestimmt.

Dadurch kann der Zeitpunkt für das Eintreten des Stillstands des Aggregats MN auf einfache Weise bestimmt werden.

Gemäß einer weiteren Ausführungsform werden die Durchsatzrate des Aggregats M1 und/oder die Durchsatzrate des Aggregats MN vor Schritt a) bestimmt.

Die Formulierung "vor Schritt a)" ist nicht dahingehend zu verstehen, dass die Durchsatzraten jedes Mal bestimmt werden, bevor die Schritte a) und b) durchlaufen werden. Vielmehr sollen die Durchsatzraten einmalig bestimmt werden, und hiernach läuft das Verfahren gemäß den Schritten a) und b) (sehr oft) ab. Die Bestimmung der Durchsatzraten soll bevorzugt allenfalls dann wiederholt werden, wenn sich Änderungen in der Produktionsanlage bzw. dem entsprechenden Aggregat ergeben, die sich auf die Durchsatzraten auswirken können. Die Durchsatzrate des Aggregats M1 und/oder die Durchsatzrate des Aggregats MN können als ein konstanter Wert oder eine Funktion der Zeit (insbesondere während einer Anlaufphase des entsprechenden Aggregats) bestimmt werden.

Gemäß einer weiteren Ausführungsform werden die Durchsatzrate des Aggregats M1 und/oder die Durchsatzrate des Aggregats MN als Stammdatum oder Stammdaten, insbesondere auf einem Datenspeicher, bereitgestellt.

Entsprechend sind die Durchsatzraten Stammdaten, die einfach zur Verfügung gestellt werden können. Stammdaten sind - und das gilt vorliegend für jedes Stammdatum, soweit nichts Gegenteiliges angegeben ist - solche Daten, die durch Messung in der Produktionsanlage (diese kann sich dabei in oder außer Betrieb befinden) bestimmt, einer Anlagenbeschreibung der Produktionsanlage entnommen und/oder auf einem Datenspeicher, insbesondere einer Steuereinrichtung der Produktionsanlage oder der Ermittlungs-Einheit der nachfolgend beschriebenen Frühwarneinrichtung, bereitgestellt werden.

Gemäß einer weiteren Ausführungsform wird der Zeitpunkt $\left(t_N^{(\text{Beginn des Materialmangels})}\right)$ für das Eintreten des Stillstands des Aggregats MN wie folgt ermittelt:

$$t_N^{(\text{Beginn des Materialmangels})} - t_1^{(\text{Beginn des angehaltenen Ausstoßes})}$$
$$\geq \sum_{i=1}^{N-1} \Delta t^{(i,i+1)(\text{kein Rückstau})}$$
$$+ \frac{1}{\varphi_N}\left\{V_1^{(\text{Anlaufphase})}\left(t_1^{(\text{Beginn des angehaltenen Ausstoßes})}\right.\right.$$
$$\left.- t'_1^{(\text{Wiederaufnahme des Ausstoßes})(\text{Vorgängerstillstand})}\right)$$
$$- \left(t_1^{(\text{Beginn des angehaltenen Ausstoßes})}\right.$$
$$\left.\left.- t'_1^{(\text{Wiederaufnahme des Ausstoßes})(\text{Vorgängerstillstand})}\right)\varphi_N\right\}$$

$$(\text{EW8N-I})$$

wobei:

$t_1^{(\text{Beginn des angehaltenen Ausstoßes})}$: der Zeitpunkt des angehaltenen Ausstoßes von Materialeinheiten aufgrund des aktuellen Stillstands beim Aggregat M1 ist,

$t'_1^{(\text{Wiederaufnahme des Ausstoßes})(\text{Vorgängerstillstand})}$: der Zeitpunkt ist, zu dem das Aggregat M1 den Ausstoß von Materialeinheiten wiederaufnimmt nach einem dem aktuellen Stillstand vorausgegangenen Stillstand (Vorgängerstillstand),

i: ein Zähler ist, der die betrachteten Aggregate M1 - MN in Richtung des Materialstroms durchzählt,

$\Delta t^{(i,i+1)(\text{kein Rückstau})}$: die Reisezeit einer Materialeinheit von einem Aggregat Mi zum Aggregat Mi+1 ohne Rückstau ist,

$$V_1^{(\text{Anlaufphase})}\left(t_1^{(\text{Beginn des angehaltenen Ausstoßes})} - t'_1^{(\text{Wiederaufnahme des Ausstoßes})(\text{Vorgängerstillstand})}\right) :=$$
$$\int_{t'_1^{(\text{Wiederaufnahme des Ausstoßes})(\text{Vorgängerstillstand})}}^{t_1^{(\text{Beginn des angehaltenen Ausstoßes})}} \varphi_1(t) ,$$

wobei $\varphi_1(t)$ die Durchsatzrate an Materialeinheiten des Aggregats M1 als Funktion der Zeit ist, und

$\varphi_N$: die Durchsatzrate an Materialeinheiten des Aggregats MN ist.

Vorteilhaft liegt (EW8N-I) eine sichere Betrachtung (worst case Szenario) zugrunde. Mit anderen Worten ist die Vorhersage im Zweifel zu pessimistisch, aber nie zu optimistisch. Weiterhin vorteilhaft sind $\sum_{i=1}^{N-1} \Delta t^{(i,i+1)(\text{kein Rückstau})}$ und/oder $\varphi_1(t)$ Stammdaten, die einfach bereitgestellt werden können.

Der Fall der Materialflussblockade kann analog behandelt werden, wie am Ende der Beschreibung dargestellt.

Gemäß einer weiteren Ausführungsform wird die Ermittlung gemäß (EW8N-I) wiederholt, sobald das Aggregat M2 aufgrund der Eigenstörung des Aggregats M1 einen Materialmangelstillstand aufweist, wobei dann bei der Ermittlung gemäß (EW8N-I) die Aggregate M2 - MN betrachtet werden.

Dieses Vorgehen kann entsprechend für M3, M4 usw. wiederholt werden, sobald M3, M4 usw. aufgrund der Eigenstörung des Aggregats M1 einen Materialmangelstillstand aufweisen. Dadurch wird die Stillstandsvorhersage genauer.

Gemäß einer weiteren Ausführungsform wird der Zeitpunkt für das Verlängern des Stillstands des Aggregats MN in Abhängigkeit eines Puffers vor dem Aggregat MN ermittelt, wobei der Puffer ein Stau an Materialeinheiten ist, der nach einem Stillstand des Aggregats MN erreicht werden muss, damit dieses wiederanläuft.

Dieser Puffer (d.h. definierter Pufferfüllstand) ist ebenfalls ein Stammdatum der Anlage und damit einfach verfügbar.

Gemäß einer weiteren Ausführungsform wird der Zeitpunkt $t_N^{(\text{Beginn des Verlängerns des Materialmangels})}$ für das Verlängern des Stillstands des Aggregats MN ermittelt als:

$$t_N^{(\text{Beginn des Verlängerns des Materialmangels})}$$
$$\geq t_1^{(\text{Beginn des angehaltenen Ausstoßes})}$$
$$+ \sum_{i=1}^{N-2} \Delta t^{(i,i+1)(\text{kein Rückstau})} + \Delta t^{(MN-1 \rightarrow \text{Puffer\_1}(MN))}$$

$$(\text{EW4bN})$$

wobei:

$t_1^{(\text{Beginn des angehaltenen Ausstoßes})}$: der Zeitpunkt des angehaltenen Ausstoßes von Materialeinheiten aufgrund des aktuellen Stillstands beim Aggregat M1 ist,

i: ein Zähler ist, der die betrachteten Aggregate M1 - MN in Richtung des Materialstroms durchzählt,

$\Delta t^{(i,i+1)(\text{kein Rückstau})}$: die Reisezeit einer Materialeinheit von einem Aggregat Mi zum Aggregat Mi+1 ohne Rückstau ist, und

$\Delta t^{(MN-1 \rightarrow \text{Puffer\_1}(MN))}$: die Reisezeit einer Materialeinheit von dem Aggregat MN-1 bis zum Beginn des Puffers (Puffer_1) vor dem Aggregat MN ist, wobei der Puffer (Puffer_1) ein Stau an Materialeinheiten ist, der nach einem Stillstand des Aggregats MN erreicht werden muss, damit dieses wiederanläuft.

Vorteilhaft sind $\sum_{i=1}^{N-2} \Delta t^{(i,i+1)(\text{kein Rückstau})}$ und/oder $\Delta t^{(MN-1 \rightarrow \text{Puffer\_1}(MN))}$ stammdaten, die einfach bereitgestellt werden können.

Gemäß einer weiteren Ausführungsform wird die Ermittlung gemäß (EW8N-I) durchgeführt, wenn festgestellt wird, dass

$$\left( t_1^{(\text{Beginn des angehaltenen Ausstoßes})} - t'^{(\text{Wiederaufnahme des Ausstoßes})(\text{Vorgänger})}_1 \right) \varphi_N \geq \max_{i=2...N} \left\{ V_{\text{Puffer\_1}\,i} \right\}$$

$$(\text{EW8C2N})$$

wobei:

$t_1^{(\text{Beginn des angehaltenen Ausstoßes})}$: der Zeitpunkt des angehaltenen Ausstoßes von Materialeinheiten aufgrund des aktuellen Stillstands beim Aggregat M1 ist,

$t'^{(\text{Wiederaufnahme des Ausstoßes})(\text{Vorgängerstillstand})}_1$ : der Zeitpunkt ist, zu dem das Aggregat M1 den Ausstoß von Materialeinheiten wiederaufnimmt nach einem dem aktuellen Stillstand vorausgegangenen Stillstand (Vorgängerstillstand),

i: ein Zähler ist, der die betrachteten Aggregate M2 - MN in Richtung des Materialstroms durchzählt,

$\varphi_N$ : die Durchsatzrate an Materialeinheiten des Aggregats MN ist, und

$V_{\text{Puffer\_1}i}$: ein Stau an Materialeinheiten vor dem Aggregat Mi ist, der nach einem Stillstand des Aggregats Mi erreicht werden muss, damit dieses wiederanläuft.

Dadurch kann eine günstige und sichere Bedingung für die Anwendbarkeit von (EW8N-I) formuliert werden.

Gemäß einer weiteren Ausführungsform wird die Ermittlung gemäß (EW4bN) durchgeführt, wenn festgestellt wird, dass

i) (EW8C2N)
nicht erfüllt ist und
ii) folgende Bedingung erfüllt ist:

$$t^{(\text{Beginn des angehaltenen Ausstoßes})(\text{Vorgängerstillstand})}_1 -$$
$$t'^{(\text{Wiederaufnahme des Ausstoßes})(\text{Vor-Vorgänger})}_1 \geq$$
$$\max_{i=2\ldots N} \widetilde{\Delta t}^{(\text{Puffer\_1 Aufbau })(\text{M}i \text{ angehalten})}$$

$$(\text{EW8C2-predN})$$

wobei:

$t^{(\text{Beginn des angehaltenen Ausstoßes})(\text{Vorgängerstillstand})}_1$ : der Zeitpunkt des angehaltenen Ausstoßes von Materialeinheiten nach einem dem aktuellen Stillstand vorausgegangen Stillstand (Vorgängerstillstand) beim Aggregat M1 ist,

$t'^{(\text{Wiederaufnahme des Ausstoßes})(\text{Vor-Vorgänger})}_1$ : der Zeitpunkt der Wiederaufnahme des Ausstoßes nach einem dem Vorgängerstillstand vorausgegangenen Stillstand (Vor-Vorgängerstillstand) ist,

i: ein Zähler ist, der die betrachteten Aggregate M2 - MN in Richtung des Materialstroms durchzählt, und

$\widetilde{\Delta t}^{(\text{Puffer\_1 Aufbau })(\text{M}i \text{ angehalten})}$ : die für den Aufbau des Puffers (Puffer_1) vor dem Aggregat Mi bei stehendem Mi benötigte Zeit ist, wobei der Puffer ein Stau an Materialeinheiten vor dem Aggregat Mi ist, der nach einem Stillstand des Aggregats Mi erreicht werden muss, damit dieses wiederanläuft,

und
iii) folgende Bedingung erfüllt ist:

$$\left( t'^{(\text{Wiederaufnahme des Ausstoßes})(\text{Vorgängerstillstand})}_1 - \right.$$
$$\left. t^{(\text{Beginn des angehaltenen Ausstoßes})(\text{Vorgängerstillstand})}_1 \right) \geq$$
$$\sum_{i=2}^{N} \Delta t^{(\text{Reduktion des max Puffers } i)} -$$
$$\sum_{i=2}^{N-1} \Delta t^{(i \, i+1)(\text{kein Rückstau})(\text{max Puffer } i+1 \to \text{M}i+1)}$$

$$(\text{EW4bCN})$$

wobei:

$t_1'^{\text{(Wiederaufnahme des Ausstoßes)(Vorgängerstillstand)}}$: der Zeitpunkt der Wiederaufnahme des Ausstoßes von Materialeinheiten nach einem dem aktuellen Stillstand vorausgegangen Stillstand (Vorgängerstillstand) beim Aggregat M1 ist,

$t_1^{\text{(Beginn des angehaltenen Ausstoßes)(Vorgängerstillstand)}}$: der Zeitpunkt des angehaltenen Ausstoßes von M1 zu Beginn des Vorgängerstillstands ist,

i: ein Zähler ist, der die betrachteten Aggregate M2-MN in Richtung des Materialstroms durchzählt,

$\Delta t^{\text{(Reduktion des max Puffers } i)}$: die für das vollständige Aufbrauchen des maximalen Puffers vor dem Aggregat Mi benötigte Zeit ist, und

$\Delta t^{(ii+1)\text{(kein Rückstau)(max Puffer } i+1 \rightarrow Mi+1)}$: die Reisezeit ist, die eine Materialeinheit von dem Beginn des maximalen Puffers i+1 vor dem Aggregat Mi+1 bis zu dem Aggregat Mi+1 benötigt.

Dadurch werden günstige und sichere Bedingungen für die Anwendung von (EW4bN) formuliert.

Gemäß einer weiteren Ausführungsform wird der letztmögliche Zeitpunkt $(t_1^{\text{(Letzte Eingriffsmöglichkeit)}})$ für einen Eingriff bei dem Aggregat M1 zur Verhinderung des Stillstands bei dem Aggregat MN ermittelt. Bevorzugt wird der letztmögliche Zeitpunkt $(t_1^{\text{(Letzte Eingriffsmöglichkeit)}})$ ermittelt gemäß:

$$t_N^{\text{(Letzte Eingriffsmöglichkeit)}} - t_1^{\text{(Beginn des angehaltenen Ausstoßes)}} \geq \frac{1}{\varphi_N}\left\{V_1^{\text{(Anlaufphase)}}\left(t_1^{\text{(Beginn des angehaltenen Ausstoßes)}} - t_1'^{\text{(Wiederaufnahme des Ausstoßes)(Vorgängerstillstand)}}\right) - \left(t_1^{\text{(Beginn des angehaltenen Ausstoßes)}} - t_1'^{\text{(Wiederaufnahme des Ausstoßes)(Vorgängerstillstand)}}\right)\varphi_N\right\}$$

$$(\text{EW9N-I})$$

wobei:

$t_1^{\text{(Beginn des angehaltenen Ausstoßes)}}$: der Zeitpunkt des angehaltenen Ausstoßes von Materialeinheiten aufgrund des aktuellen Stillstands beim Aggregat M1 ist,

$t_1'^{\text{(Wiederaufnahme des Ausstoßes)(Vorgängerstillstand)}}$: der Zeitpunkt ist, zu dem das Aggregat M1 den Ausstoß von Materialeinheiten wiederaufnimmt nach einem dem aktuellen Stillstand vorausgegangenen Stillstand (Vorgängerstillstand),

i: ein Zähler ist, $V_1^{\text{(Anlaufphase)}}\left(t_1^{\text{(Beginn des angehaltenen Ausstoßes)}} - t_1'^{\text{(Wiederaufnahme des Ausstoßes)(Vorgängerstillstand)}}\right) :=$

$\int_{t_1'^{\text{(Wiederaufnahme des Ausstoßes)(Vorgängerstillstand)}}}^{t_1^{\text{(Beginn des angehaltenen Ausstoßes)}}} \varphi_1(t)$, wobei $\varphi_1(t)$ die Durchsatzrate an Materialeinheiten des Aggregats M1 als Funktion der Zeit ist, und

$\varphi_N$: die Durchsatzrate an Materialeinheiten des Aggregats MN ist.

Gemäß einer weiteren Ausführungsform wird in Abhängigkeit des ermittelten Zeitpunkts eines Eintretens oder eines Verlängerns eines Stillstands ein Alarm ausgelöst und/oder ein Fehlerbehebungsprozess gestartet.

Der Alarm kann die Ausgabe akustischer und/oder visueller Signale, etwa mittels eines Lautsprechers bzw.

Bildschirms, umfassen. Durch den Fehlerbehebungsprozess wird die Eigenstörung des Aggregats M1 beseitigt. Der Fehlerbehebungsprozess kann durch einen Menschen und/oder teil- oder vollautomatisiert ausgeführt werden.

Gemäß einem weiteren Aspekt wird bereitgestellt eine Frühwarneinrichtung zur Vorhersage eines Stillstands eines Aggregats MN von mehreren Aggregaten M1 - MN, wobei N ≥ 2, einer Produktionsanlage, insbesondere Abfüllanlage in der Lebensmittelindustrie, mit durch die Aggregate M1 - MN geförderten Materialeinheiten, insbesondere Flaschen, mit:

einer Feststell-Einheit zum Feststellen einer Eigenstörung eines Aggregats M1, und
einer Ermittlungs-Einheit zum Ermitteln des Zeitpunkts eines Eintretens oder eines Verlängerns eines Stillstands des Aggregats MN aufgrund eines Mangels an Materialeinheiten oder einer Materialflussblockade als Folge der Eigenstörung des Aggregats M1.

Gemäß einem weiteren Aspekt wird bereitgestellt Produktionsanlage, insbesondere Abfüllanlage in der Lebensmittelindustrie, mit:

mehreren Aggregaten M1 - MN, durch welche Materialeinheiten, insbesondere Flaschen, förderbar sind, wobei N ≥ 2, und
einer Frühwarneinrichtung, wie vorstehend beschrieben.

Die jeweilige Einrichtung oder Einheit, zum Beispiel die Frühwarneinrichtung, Steuereinrichtung, Feststell-Einheit oder Ermittlungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einrichtung bzw. Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Verfahren beschriebenen Ausführungsformen und Merkmale gelten für die vorgeschlagene Frühwarneinrichtung, die vorgeschlagene Produktionsanlage sowie das Computerprogrammprodukt entsprechend.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt schematisch eine Produktionsanlage gemäß einem Ausführungsbeispiel;

Fig. 2 zeigt ausschnittsweise ein weiteres Ausführungsbeispiel einer Produktionsanlage;

Fig. 3 zeigt beispielhaft unterschiedliche Zustände eines Aggregats M2 der Produktionsanlage aus Fig. 2 anhand eines Zeitstrahls;

Fig. 4 zeigt ein Ablaufdiagramm eines Verfahrens gemäß einem Ausführungsbeispiel; und

Fig. 5 zeigt ein weiteres Ablaufdiagram gemäß einem Teilausschnitt aus dem Verfahren gemäß Fig. 4.

In den Figuren sind gleiche oder funktionsgleiche Elemente mit denselben Bezugszeichen versehen worden, sofern nichts anderes angegeben ist.

Der hier beschriebene Ansatz setzt wie die klassische Root Cause Analysis (RCA) eine vorhandene strukturelle Anlagenbeschreibung voraus. Diese beschreibt die topologische Anordnung sowie Verbindungen der Komponenten in der Anlage unter Berücksichtigung der Materialflussrichtung und kann beispielsweise aus Planungsunterlagen abgeleitet werden. Aus der strukturellen Anlagenbeschreibung ergeben sich die Nachbarschaftsbeziehungen eines Aggregats, die Grundlage sind für die Analyse der kausalen Propagation von Störungen.

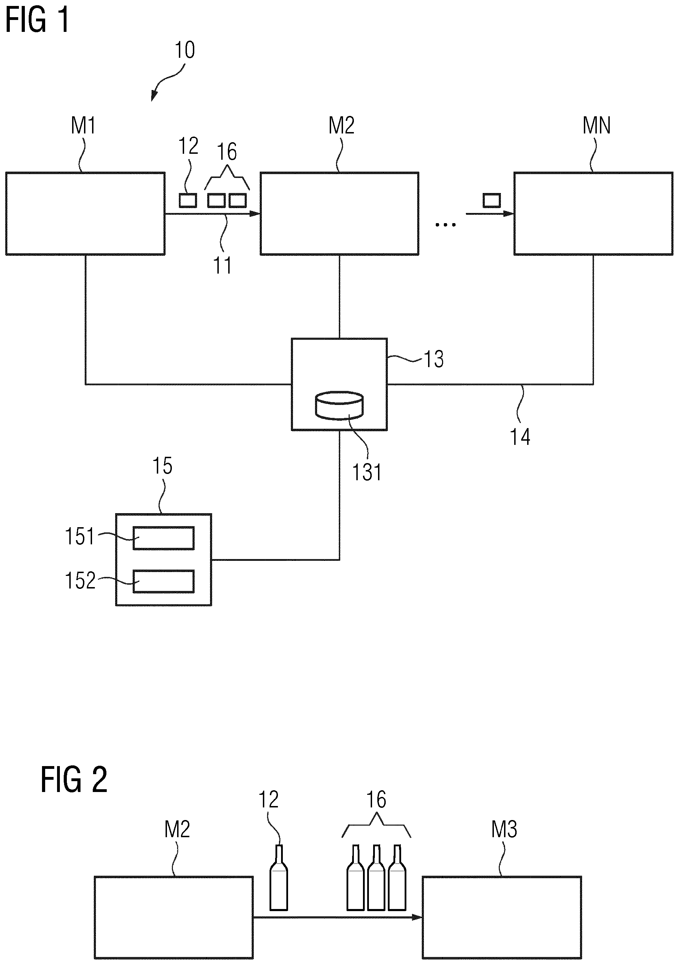

Insofern ist in Fig. 1 eine Produktionsanlage 10 gezeigt. Diese umfasst Aggregate M1, M2 - MN, wobei $N \geq 2$. Bei der Produktionsanlage 10 kann es sich beispielsweise um eine Abfüllanlage in der Getränke- oder (sonstige) Lebensmittel-Industrie handeln. Entsprechend können die Aggregate M1 - MN beispielsweise als Flaschenreinigungsstation, Abfüllstation, Kronkorkenverschlussgerät, Etikettiergerät usw. ausgebildet sein. Grundsätzlich ist eine Anwendung der vorliegend beschriebenen Aspekte auch in jeder anderen Industrie denkbar, also immer dort, wo voneinander abgrenzbare Materialeinheiten, insbesondere Stückgüter (bspw. Flaschen, aber auch sonstige Stückgüter), entlang einer Förderstrecke transportiert werden und entlang dieser mit mehreren Aggregaten wechselwirken.

Die Aggregate M1 - MN sind - rein beispielhaft und dem einfacheren Verständnis dienend - unverzweigt miteinander verkettet, obgleich auch Verzweigungen vorgesehen sein können. Die Aggregate M1 - MN sind mittels Fördereinrichtungen 11, beispielsweise Förderbändern, miteinander verkettet. Mithilfe der Fördereinrichtungen 11 werden Materialeinheiten 12 von einem Aggregat zum nächsten transportiert. Die Materialeinheiten 12 sind beispielsweise Flaschen, wie in Fig. 2 illustriert.

Eine Steuereinrichtung 13 der Produktionsanlage 10 steuert die Aggregate M1 - MN sowie die Fördereinrichtungen 11 an. Hierzu ist die Steuereinrichtung 13 mittels Datenverbindungen 14 mit den Aggregaten M1 - MN sowie den Fördereinrichtungen 11 verbunden. Die Steuereinrichtung 13 erfasst beispielsweise Zustände der Aggregate M1 - MN, wie etwa einen (aktiven) Ausstoß von Materialeinheiten 12 (produktiver Betrieb) oder einen Stillstand des jeweiligen Aggregats M1 - MN (kein Ausstoß von Materialeinheiten), jeweils verbunden mit einem Zeitstempel (Datum, Uhrzeit). Es können auch mehrere Steuereinrichtungen 13 vorgesehen sein, die jeweils einem Aggregat M1 - MN zugeordnet und insbesondere miteinander vernetzt sind. Nur der Einfachheit halber wird vorliegend von "einer" Steuereinrichtung gesprochen.

Vor einem jeweiligen Aggregat M1 - MN ist eine Puffereinrichtung 16 vorhanden, womit allgemein eine Speichereinrichtung gemeint ist. Die Puffereinrichtung 16 kann als eine Pufferstrecke gebildet sein, auf der sich die Materialeinheiten 12 ansammeln können. Die Puffereinrichtung 16 kann durch die Fördereinrichtung 11 selbst gebildet werden, wie etwa mehrere Flaschen, die sich auf einem Förderband (über die Pufferstrecke) ansammeln.

In diese Puffereinrichtungen 16 kann eine Anzahl Materialeinheiten 12 gefördert und dort gespeichert werden. Die Materialeinheiten 12 werden von dem jeweils nachgeordneten Aggregat M1 - MN bei Bedarf aus der Puffereinrichtung 16 entnommen. Die Größe der Puffereinrichtungen 16 kann unterschiedlich bemessen sein. Insbesondere kann jede Puffereinrichtung 16 einen maximalen und/oder minimalen Puffer - gemeint sind Pufferfüllstande (vorliegend auch als obere bzw. untere Marke oder Maximal- bzw. Minimalmarke bezeichnet) - aufweisen. So sind nachfolgend beispielsweise kritische minimale Pufferfüllstände Puffer_1 und Puffer_2 beschrieben, die von der Steuerung 13 abgefragt werden und die grundsätzlich zu beliebigen Zeiten erreicht werden können. Die Puffer_1 und Puffer_2 sind dabei feste Marken. Dagegen ist der nachfolgend ebenfalls beschriebene Puffer_3 ein zeitvariabler Pufferfüllstand (der sich in Abhängigkeit der Materialflussdynamik verändert).

Vorteilhaft benötigt das vorliegend beschriebene Verfahren keine quantitative Erfassung der Pufferfüllstände, sondern nur das, was jede Produktionsanlage zwangsläufig haben muss, nämlich die Überwachung eines minimalen Pufferfüllstands, unter dem das dahinterliegende Aggregat abgeschaltet werden muss (Materialmangelzustand), und einem maximalen Pufferfüllstand, über dem das davorliegende Aggregat abgeschaltet werden muss (Materialflussblockade).

Weitere Einzelheiten der Puffereinrichtungen und Puffer bzw. Pufferfüllstände ergeben sich aus der nachfolgenden Beschreibung.

In der aus dem Stand der Technik bekannten Standard-RCA werden für das Aggregat M (eines der Aggregate M1 - MN) in den verfügbaren Daten Alarmmeldungen gesucht, die einen beobachteten Stillstand von Aggregat M erklären. Für den Fall eines Stillstands durch Materialmangel wird dazu der Materialfluss entgegen der Flussrichtung zurückverfolgt und die Zustände der auf dem entsprechenden Pfad liegenden Aggregate geprüft. Im Fall des Stillstands durch Rückstau geht man in Richtung des Materialflusses vor.

Für jede der gefundenen Alarmmeldungen in vor- oder nachgelagerten Aggregaten wird anschließend untersucht, ob der Alarm in einem Zeitfenster aufgetreten ist, das so liegt, dass der beobachtete Stillstand des Aggregats M erklärt werden kann als Folge des Stillstands des vor- bzw. nachgelagerten Aggregats. Die Betrachtung wird so lange iteriert, bis ein Aggregat gefunden ist, für das eine Eigenstörung vorliegt (root cause Aggregat).

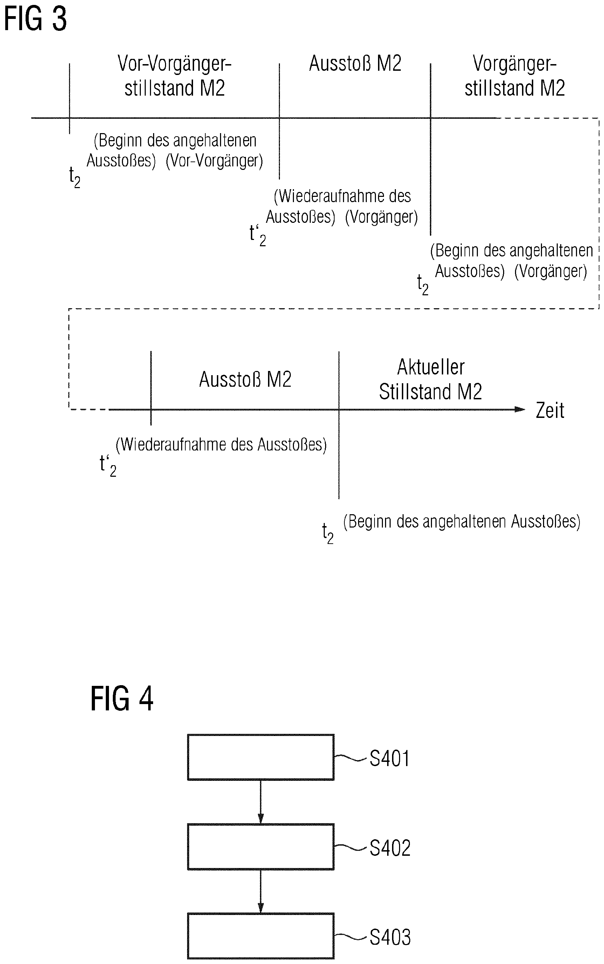

Für die hier vorgeschlagene Frühwarnfunktion, die mittels einer in Fig. 1 gezeigten Frühwarneinrichtung 15 bereitgestellt wird, wird nun die Betrachtungsrichtung umgekehrt und es wird nicht von der Beobachtung eines Stillstands des Bottleneck-Aggregats (beispielsweise Aggregat MN im Fall eines Materialmangels, Aggregat M1 im Fall eines Rückstaus) ausgegangen, sondern von einer beliebigen Eigenstörung eines vor- oder nachgelagerten Aggregats. Die Feststellung der entsprechenden Eigenstörung erfolgt mithilfe einer Feststelleinheit 151 (Fig. 1) der Frühwarneinrichtung 15 in einem Schritt S401 (Fig. 4).

Dauert eine solche Eigenstörung genügend lange an, so wird sie zwangsläufig zum Stillstand des Bottleneck-Aggregats (Aggregat MN) durch Materialmangel oder Rückstau führen. Viele dieser Störungen sind allerdings von kurzer Dauer und sollten nicht unbedingt sofort bearbeitet werden, da dies hohe Kosten ohne entsprechenden Gegenwert verursachen würde. Zudem ist es oft sinnvoll, bei einem Eingreifen mehrere Störungen zusammen zu bearbeiten.

Eine Ermittlungs-Einheit 152 (Fig. 1) der Frühwarneinrichtung 15 prüft daher in einem Schritt 502 (Fig. 4), wie lange es bei Fortbestehen der Störung dauern würde, bis das Bottleneck-Aggregat zum Stillstand kommt. Diese Information wird vorzugsweise noch ergänzt, weil keineswegs diese ganze Zeit zur Verfügung steht, um das Eintreten des Stillstands des Bottleneck-Aggregats noch durch ein Eingreifen beim gestörten Aggregat zu verhindern. Deshalb bestimmt die Ermittlungs-Einheit 152 in einem Schritt S403 auch noch, wie lange noch Zeit ist, um die Störung zu beheben, ohne dass es zu einem Stillstand des bottleneck-Aggregats kommt (diese Zeit ist i.a. deutlich kürzer). Die Ausgabe der Vorwarnung bzw. Frühwarn-Meldung, insbesondere mithilfe der Frühwarneinrichtung 15, kann so konfiguriert werden, dass z.B. erst dann ein Alarm erfolgt, wenn die noch zur Verfügung stehende Eingreifzeit eine bestimmte Schranke (Schwellwert) unterschreitet. Im Anschluss an den Alarm wird bevorzugt ein Fehlerbehebungsprozess gestartet. Dazu kann sich eine Bedienerperson zu dem Aggregat in Eigenstörung bewegen und an diesem Reparaturmaßnahmen vornehmen. Der Fehlerbehebungsprozess kann auch teil- oder vollautomatisiert ablaufen (etwa durch einen Neustart der Maschine nach dem Herausfahren des Materials, das ggf. den Fehlerzustand verursacht hat).

Im Folgenden wird die Funktionsweise der Ermittlungs-Einheit 152 (bzw. der Frühwarneinrichtung 15) bzw. das von ihr ausgeführte Verfahren näher beschrieben. Es wird zunächst - dem einfacheren Verständnis halber - eine Etappe wie in Fig. 2 betrachtet, also die kausale Ausbreitung des Effekts des Stillstands von M2 auf M3. Weiterhin wird nur der Fall einer sich durch die Anlage ausbreitenden Materialmangels (starvation) explizit betrachtet. Der Fall einer sich durch die Anlage ausbreitenden Materialflussblockade (tailback) wird ganz analog behandelt, wie am Ende der Beschreibung dargestellt. In einem zweiten Schritt wird die Verallgemeinerung von einer auf N Etappen beschrieben.

Beschreibung der Vorhersagefunktionen für den einstufigen Fall (M2 -> M3):

I) Stillstandsvorhersage

Anstelle der Prüfung von Stillstandsmeldungen von M2 bei vorgegebenem Beginn des Stillstands von M3 wird nun der letztere als unbekannt betrachtet, stattdessen betrachtet man eine vorgegebene Stillstandsmeldung von M2. Relevant sind Stillstandsmeldungen, die zum aktuellen Zeitpunkt $t_{\text{jetzt}}$ bereits vorliegen,

$$t_2^{(\text{Beginn des angehaltenen Ausstoßes})} \leq t_{\text{jetzt}} \, , \tag{EW1}$$

aber noch nicht beendet sind,

$$t_2'^{(\text{Wiederaufnahme des Ausstoßes})} > t_{\text{jetzt}} \tag{EW2}$$

Hier ist $t_2^{(\text{Beginn des angehaltenen Ausstoßes})}$ der Zeitpunkt, zu dem der Ausstoß von M2 endet (egal, ob durch eine Eigenstörung bedingt oder durch Materialmangel), und $t_2'^{(\text{Wiederaufnahme des Ausstoßes})}$ der Zeitpunkt, zu dem der Ausstoß von M2 wieder einsetzt (der Apostroph dient der leichteren Erkennbarkeit von Zeiten, die das Ende eines Stillstands markieren). Entsprechende Zeitpunkte sind in Fig. 3 illustriert. Diese Zeitpunkte sind Betriebsdaten, die als verfügbar vorausgesetzt werden und die beispielsweise von der Frühwarneinrichtung 15 von dem Aggregat M2 oder der Steuereinrichtung 13 abgefragt werden.

Bei bereits beendeten Stillständen $(t_2'^{(\text{Wiederaufnahme des Ausstoßes})} \leq t_{\text{jetzt}}$, in Verletzung von (EW2)) besteht offensichtlich kein Handlungsbedarf mehr, also werden diese im Folgenden auch nicht betrachtet als Kandidaten für eine Frühwarn-Meldung, obwohl es durchaus sein kann, dass sich der schon beendete Stillstand erst in der Zukunft auswirken wird auf M3 und u.U. einen Stillstand von M3 verursachen wird. Es besteht jedoch in diesem Fall keine Möglichkeit mehr, präventiv einzugreifen, und außerdem würde nach dem vorgeschlagenen Verfahren der fragliche Stillstand in jedem Fall schon vor seiner Beendigung erfasst worden sein als Kandidat zur Auslösung einer Frühwarn-Meldung.

Es ist nun zu prüfen, ab welcher Dauer ein solcher Stillstand in der Zukunft zu einem Stillstand von M3 führen würde, oder, falls M3 zum Zeitpunkt der kausalen Auswirkung bei M3 des betrachteten Stillstands bereits im Stillstand ist, diesen über sein "normales" Ende hinaus zu verlängern.

Man muss also zwei Fälle unterscheiden:

1) Bei Eintreffen am Stau vor M3 der letzten Flasche vor Beginn des Stillstands von M2 befindet sich M3 nicht im Stillstand wegen Materialmangels (Materialmangelstillstand), läuft also (Fall 1).

2) Bei Eintreffen am Stau vor M3 der letzten Flasche vor Beginn des Stillstands von M2 befindet sich M3 im Stillstand wegen Materialmangels (Materialmangelstillstand), läuft also nicht (Fall 2).

Notwendige und hinreichende Bedingung für die Auslösung eines Stillstands bei noch laufendem M3 ist, dass der Stillstand von M2 lange genug dauert, um den Puffer vor M3 vollständig abzubauen. Ein solcher Puffer wird generischerweise vorhanden sein, um ein Leerlaufen von M3 wegen Materialmangels möglichst zu verhindern. Er kann realisiert sein durch eine gesonderte Speichereinheit oder einfach dadurch, dass sich auf dem von M2 zu M3 führenden Transportband im letzten Abschnitt vor M3 Flaschen anstauen. Der Effekt ist im Prinzip derselbe, so dass der Konkretheit der Beschreibung wegen im Folgenden vom letzteren Fall ausgegangen wird.

Bei einem bereits bestehenden Stillstand von M3 wird der Stillstand von M2 den Wiederaufbau des zum wieder Anlaufen notwendigen Mindestpuffers Puffer_1 von M3 verzögern (ein solcher Mindestpuffer wird i.a. gefordert, um ein unerwünschtes häufiges Ein- und Ausschalten von M3 wegen des unregelmäßigen Zustroms zu verhindern).

Betrachtet sei zunächst Fall 1), d.h. M3 läuft bei Eintreffen der letzten Flasche am Stau vor M3 vor Beginn des betrachteten Stillstands von M2. Der Puffer vor M3 ist allerdings nicht genau bekannt. Im ungünstigsten Fall (geringste Vorwarnzeit) besteht fast gar kein Puffer, nämlich wenn vorhergehende Stillstände von M2 diesen bereits weitestgehend reduziert haben, ohne ihn jedoch vollständig abzubauen und damit einen Stillstand von M3 zu verursachen. In diesem ungünstigsten Fall, der nur eintreten kann, wenn der aktuelle Stillstand von M2 ziemlich bald nach dem Ende des letzten Stillstands von M2 beginnt, wird die letzte Flasche vor dem Beginn des betrachteten Stillstands von M2 (fast) unbehindert von einem Stau bis zu M3 reisen. Somit hat man allgemein

$$t_3^{(\text{Beginn des Materialmangels})} \geq t_2^{(\text{Beginn des angehaltenen Ausstoßes})} + \Delta t^{(23)(\text{kein Rückstau})}$$

$$(\text{EW3})$$

Hier ist $t_3^{(\text{Beginn des Materialmangels})}$ der Zeitpunkt, zu dem M3 wegen Materialmangels von der Steuereinrichtung 13 in den Materialmangelmodus versetzt wird (nicht notwendig der Zeitpunkt, zu dem der Ausstoß von M3 endet), und $t_2^{(\text{Beginn des angehaltenen Ausstoßes})}$ der Zeitpunkt, zu dem der Ausstoß von M2 endet. Diese Daten werden wiederum als Betriebsdaten von den Aggregaten oder der Steuereinrichtung 13 bzw. deren Speicher 131 abgefragt durch die Frühwarneinrichtung 15. Weiterhin ist $\Delta t^{(23)(\text{kein Rückstau})}$ die unbehinderte Reisezeit von M2 zu M3 ohne Verweildauer in einem Stau. Dies ist ein Stammdatum, das ein für alle Mal durch eine Messung bestimmt werden kann. Diese Reisezeit unterliegt noch gewissen statistischen Schwankungen, bewegt sich also in einem kleinen Zeitintervall

$$\Delta t^{(23)(\text{kein Rückstau})} \in \left[ \Delta t_{\min}^{(23)(\text{kein Rückstau})}, \Delta t_{\max}^{(23)(\text{kein Rückstau})} \right]$$

$$(\text{TTI})$$

welches ebenfalls durch Messungen bestimmt werden kann. Für die statistischen Schwankungen kann i.a. in guter Näherung eine Gaußverteilung angenommen werden. Die Messwerte von $\Delta t^{(23)(\text{kein Rückstau})}$ können dann verwendet werden, um Mittelwert und Varianz - die beiden einzigen Parameter der Gaußverteilung - entsprechend zu fitten. Kennt man Mittelwert und Varianz, so kann man entsprechend das Intervall (TTI) als das 1 Sigma, 2 Sigma, 3 Sigma usw.

-Intervall wählen, mit einer entsprechenden Wahrscheinlichkeit von 68%, 96%, 99,7%, usw. dass kein Wert außerhalb des Intervalls in einem gegebenen Fall auftritt.

Somit hat man als sichere Abschätzung für das früheste mögliche Auftreten eines Stillstands von M3

$$t_3^{(\text{Beginn des Materialmangels})} \geq t_2^{(\text{Beginn des angehaltenen Ausstoßes})} + \Delta t_{\min}^{(23)(\text{kein Rückstau})}$$

$$(EW3')$$

Die Vorwarnzeit ist in diesem Fall also gegeben durch

$$t_3^{(\text{Beginn des Materialmangels})} - t_2^{(\text{Beginn des angehaltenen Ausstoßes})} \geq \Delta t_{\min}^{(23)(\text{kein Rückstau})}$$

$$(EW4a)$$

Allerdings ist (EW4a) im Allgemeinen zu pessimistisch, weil angenommen ist, dass die letzte Flasche vor Beginn des Stillstands von M3 auf (fast) keinen Puffer vor M3 trifft. Sie wird im Folgenden daher noch verbessert.

Betrachtet sei nun Fall 2), dass M3 bereits steht, wenn die letzte Flasche vor Beginn des betrachteten Stillstands von M2 am Stau vor M3 eintrifft (dieses ist die extremste Ausprägung eines durch Vorgänger-Stillstände von M2 bereits reduzierten Puffers von M3). Dann wird der Zeitpunkt, zu dem M3 freigegeben werden kann zur Wiederaufnahme der Produktion, notwendig (unverhinderbar) verzögert. Dieser Zeitpunkt ist dadurch definiert, dass der Stau vor M3 eine gewisse Mindestgröße (im Folgenden bezeichnet mit Puffer_1) erreicht haben muss; dies geschieht, um ständiges An- und Abschalten von M3 zu vermeiden, falls der Zufluss unregelmäßig ist. Diese Mindestgröße Puffer_1 wird dann wegen der Unterbrechung der Zufuhr von M2 offensichtlich später erreicht, und die Wiederaufnahme der Produktion von M3 verschiebt sich um die Differenz der Ankunftszeiten der letzten Flasche vor Beginn des Stillstands von M2 und der ersten Flasche nach Ende des Stillstands. Der Effekt wird sichtbar zu der Zeit, zu der andernfalls der Stillstand von M3 beendet gewesen wäre. Im ungünstigsten Fall (geringste Vorwarnzeit) ist es so, dass der Mindestpuffer Puffer_1 vor M3 schon fast wieder erreicht ist, wenn die letzte Flasche von M2 eintrifft. Das heißt, die Vorwarnzeit für diesen Fall ist abschätzbar durch

$$t_3^{(\text{Beginn des Verlängerns des Materialmangels})} - t_2^{(\text{Beginn des angehaltenen Ausstoßes})} \geq \Delta t_{\min}^{(23)(\text{kein Rückstau})(\text{M2}\to\text{Puffer\_1})}$$

$$(EW4b)$$

In (EW4b) ist $t_3^{(\text{Beginn des Verlängerns des Materialmangels})}$ der Zeitpunkt, zu dem der Stillstand von M3 ohne den fraglichen Stillstand von M2 beendet gewesen wäre, sich nun aber verlängert. Weiterhin ist $\Delta t_{\min}^{(23)(\text{kein Rückstau})(\text{M2}\to\text{Puffer\_1})}$ die Zeit, die die letzte Flasche von M2 vor Beginn des Stillstands von M2 braucht, um am Ende des Mindest-Puffers vor M3 anzukommen, auch dies ist ein zu messendes Stammdatum.

Diese Vorwarnzeit ist somit etwas kürzer als die durch (EW4a) für den anderen Fall gegebene. Es ist allerdings im Rahmen der hier als verfügbar angenommenen Betriebsdaten nicht immer möglich, sicher zu wissen, ob der für (EW4a) relevante oder der für (EW4b) relevante Fall vorliegt. Es müsste also im Zweifel immer die kürzere Vorwarnzeit (EW4b) benutzt werden.

In Zusammenfassung von (EW4a) und (EW4b) kann folgende Aussage getroffen werden:

Frühestens zum Zeitpunkt $t_2^{(\text{Beginn des angehaltenen Ausstoßes})} + \Delta t_{\min}^{(23)(\text{kein Rückstau})(\text{M2}\to\text{Puffer\_1})}$ tritt eine Stillstandsverlängerung von M3 und frühestens zum Zeitpunkt $t_2^{(\text{Beginn des angehaltenen Ausstoßes})} + \Delta t_{\min}^{(23)(\text{kein Rückstau})}$ ein neuer stillstand von M3 ein. Natürlich kann immer nur einer der beiden Fälle realisiert sein. (EW4a,b) erfordern keine besonderen Annahmen über die Anlagensteuerung und sind insofern sehr robust, andererseits aber von sehr schwacher Aussagekraft (sehr kurze Vorwarnzeiten). Deshalb wird im Folgenden eine Verbesserung von (EW4a,b) dargestellt, die unter sehr allgemeinen Annahmen gültig ist.

Die auf (EW4a,b) führenden Betrachtungen machen keine Annahme zur Größe des Puffers vor M3 bei Eintritt des betrachteten Stillstands von M2, insbesondere wird dieser nicht als messbar angenommen. Im Allgemeinen weiß man aber durchaus etwas über den Puffer vor M3 zum Zeitpunkt $t_2^{(\text{Beginn des angehaltenen Ausstoßes})}$, aufgrund der bekannten Vorgeschichte eventuell vorangegangener Stillstände.

Die Regelung der Durchsätze der Aggregate M2 und M3 wird im Normalbetrieb (keine technisch bedingten Stillstände in der Anlage) immer sicherstellen, dass der Stau vor M3 eine gewisse Mindestgröße nicht unterschreitet.

Wenn also bekannt ist, dass das Ende des letzten VorgängerStillstands von M2 so weit in der Vergangenheit liegt, dass zum Zeitpunkt des Eintreffens der letzten Flasche vor Beginn des betrachteten Stillstands am Stauende Normalbedingungen herrschen, d.h. dass der Puffer nicht die unter Normalbedingungen gültige Mindestgröße unterschreiten kann, dann weiß man, dass erstens nicht der Fall 2) eines M3 im Stillstand vorliegt (sondern Fall 1)) und zweitens, dass $\Delta t_{min}^{(23)(\text{kein Rückstau})}$ ersetzt werden darf durch $\Delta t_{min}^{(23)(\text{kein Rückstau})(\text{M2}\rightarrow\text{Puffer\_2})} +$ $\Delta t_{min}^{(23)(\text{Reduktion des Puffers\_2})}$, wobei Puffer_2 dem minimalen im Normalbetrieb auftretenden Puffer von M3 entspricht (dieser kann, muss aber nicht gleich sein dem minimalen Puffer Puffer_1, der für die Freigabe von M3 zur Wiederaufnahme der Produktion nach einem Stillstand erforderlich ist). Die Zeit $\Delta t_{min}^{(23)(\text{kein Rückstau})(\text{M2}\rightarrow\text{Puffer\_2})}$ ist analog zu $\Delta t_{min}^{(23)(\text{kein Rückstau})(\text{M2}\rightarrow\text{Puffer\_1})}$ definiert, und die Zeit $\Delta t_{min}^{(23)(\text{Reduktion des Puffer\_2})}$ ist die Zeit, die eine Flasche braucht, um vom Stauende des minimalen Puffers Puffer_2 bis zum Eingang von M3 zu gelangen, also die Zeit für die Durchquerung des entsprechenden Staus vor M3. Beide Zeiten sind wiederum durch Messungen bestimmbare Stammdaten.

Die Summe $\Delta t_{min}^{(23)(\text{kein Rückstau})(\text{M2}\rightarrow\text{Puffer\_2})} + \Delta t_{min}^{(23)(\text{Reduktion des Puffer\_2})}$ ist i.a. sehr viel grösser als $\Delta t_{min}^{(23)(\text{kein Rückstau})}$, und deshalb gewinnt man erheblich an Vorwarnzeit durch Benutzung der Information über den minimalen Puffer unter Normalbedingungen.

Man erhält dann, zunächst ohne Berücksichtigung der statistischen Schwankungen,

$$t_3^{(\text{Beginn des Materialmangels})} \geq t_2^{(\text{Beginn des angehaltenen Ausstoßes})} +$$
$$\Delta t^{(23)(\text{kein Rückstau})(\text{M2}\rightarrow\text{Puffer\_2})} + \Delta t^{(23)(\text{Reduktion des Puffer\_2})} \equiv$$
$$t_2^{(\text{Beginn des angehaltenen Ausstoßes})} + \Delta t^{(23)(\text{kein Rückstau})} -$$
$$\Delta t^{(23)(\text{kein Rückstau})(\text{Puffer\_2}\rightarrow\text{M3})} + \Delta t^{(23)(\text{Reduktion des Puffer\_2})}$$

$$(\text{EW5})$$

wobei $\Delta t^{(23)(\text{kein Rückstau})(\text{Puffer\_2}\rightarrow\text{M3})}$ die Reisezeit einer Flasche vom Beginn des Puffers (Puffer_2) bis zum Aggregat M3 ohne Rückstau ist,
bzw. mit Berücksichtigung statistischer Schwankungen,

$$t_3^{(\text{Beginn des Materialmangels})} \geq t_2^{(\text{Beginn des angehaltenen Ausstoßes})} +$$
$$\left(\Delta t^{(23)(\text{kein Rückstau})} - \Delta t^{(23)(\text{kein Rückstau})(\text{Puffer\_2}\rightarrow\text{M3})}\right)_{min} +$$
$$\Delta t_{min}^{(23)(\text{Reduktion des Puffer\_2})}$$

$$(\text{EW5'})$$

(EW5) und (EW5') gelten im Fall 1) und unter der zusätzlichen Voraussetzung, dass nach dem Ende des Vorgängerstillstands von M2 der Mindestpuffer Puffer_2 erreicht wird, bevor der aktuelle Stillstand von M2 sich auswirkt. (EW5), (EW5') lassen sich verallgemeinern auf den Fall, wo 1) immer noch gültig ist, aber der Mindestpuffer Puffer_2 nicht erreicht wird. Wenn der Minimalpuffer nicht voll aufgebaut wird, bleibt (EW5) gültig mit der Ersetzung Puffer_2 → Puffer_3, wobei Puffer_3 ein gegenüber Puffer_2 reduzierter Puffer ist:

$$t_3^{(\text{Beginn des Materialmangels})}$$
$$\geq t_2^{(\text{Beginn des angehaltenen Ausstoßes})}$$
$$+ \Delta t^{(23)(\text{kein Rückstau})(\text{M2}\to\text{Puffer\_3})} + \Delta t^{(23)(\text{Reduktion des Puffers3})}$$

$$(\text{EW6})$$

bzw.

$$t_3^{(\text{Beginn des Materialmangels})} \geq t_2^{(\text{Beginn des angehaltenen Ausstoßes})} +$$
$$\Delta t_{\min}^{(23)(\text{kein Rückstau})(\text{M2}\to\text{Puffer\_3})} + \Delta t_{\min}^{(23)(\text{Reduktion des Puffers3})}$$

$$(\text{EW6'})$$

(EW6) kann im Gegensatz zu (EW5) nicht direkt ausgewertet werden, weil Puffer_3 eine dynamische Größe ist. Um (EW6) auswertbar zu machen, betrachtet man die letzte Flasche vor Beginn des aktuellen Stillstands. Diese Flasche eilt dem gesamten in der Zwischenzeit seit dem Ende des letzten Stillstands von M2 ausgestoßenen Volumen hinterher. Dieses Volumen folgt notwendigerweise unterbrechungsfrei auf die erste Flasche nach Ende des Vorgängerstillstands. Damit weiß man aber, dass diese letzte Flasche zum Zeitpunkt

$$t_{\text{last, arr.}} - t_{\text{1st, arr.}} = V_{\text{gap}}/\varphi_3$$

$$(\text{tlast})$$

bei M3 ankommt, wobei $V_{\text{gap}}$ das in der Lücke zwischen den zwei Stillständen von M2 ausgestoßene Volumen ist und $\varphi_3$ der (normale) Ausstoß von M3, also das eingezogene Volumen pro Zeiteinheit. Dieser und im Folgenden auftauchende Aggregatdurchsätze werden als Stammdaten (in den Aggregaten selbst bzw. der Steuereinrichtung 13 bzw. deren Speicher 131 hinterlegt) betrachtet oder durch Messung bestimmt. Letzterenfalls werden die gemessenen Stammdaten in dem Speicher 131 oder einem nicht-gezeigten Speicher der Frühwarneinrichtung 15 hinterlegt. $t_{\text{last, arr.}}$ ist gleichzeitig der Beginn des Materialmangel, $t_{\text{last, arr.}} = t_3^{(\text{Beginn des Materialmangels})}$, und $t_{\text{1st, dep.}} = t_2'^{(\text{Wiederaufnahme des Ausstoßes})(\text{Vorgängerstillstand})}$.

Es muss andererseits gelten

$$t_{\text{1st, arr}} - t_{\text{1st, dep.}} = t_{\text{1st, arr}} - t_2^{(\text{Wiederaufnahme des Ausstoßes})(\text{Vorgängerstillstand})} \geq \Delta t^{(23)(\text{kein Rückstau})}$$

$$(\text{t1st})$$

so dass man insgesamt erhält

$$t_3^{(\text{Beginn des Materialmangels})} -$$

$$t_2'^{(\text{Wiederaufnahme des Ausstoßes})(\text{Vorgängerstillstand})} \geq \Delta t^{(23)(\text{kein Rückstau})} +$$

$$V_{\text{gap}}/\varphi_3$$

$$(\text{tbos1})$$

Es ist nach Definition von $V_{\text{gap}}$ als in der Lücke zwischen zwei Stillständen von M2 ausgestoßenes Volumen

$$V_{\text{gap}} = \Big( t_2^{(\text{Beginn des angehaltenen Ausstoßes})} -$$

$$t_2'^{(\text{Wiederaufnahme des Ausstoßes})(\text{Vorgängerstillstand})} \Big) \varphi_2$$

$$(\text{Vgap})$$

wobei jetzt $\varphi_2$ der Ausstoß von M2 ist nach einem Stillstand (i.a. etwas höher als der Ausstoß im Gleichgewichtszustand, weil erst wieder ein Puffer vor M3 aufgebaut werden muss), so dass (tbos1) wird zu

$$t_3^{(\text{Beginn des Materialmangels})} - t_2'^{(\text{Wiederaufnahme des Ausstoßes})(\text{Vorgängerstillstand})}$$

$$\geq \Delta t^{(23)(\text{kein Rückstau})}$$

$$+ \Big( t_2^{(\text{Beginn des angehaltenen Ausstoßes})}$$

$$- t_2'^{(\text{Wiederaufnahme des Ausstoßes})(\text{Vorgängerstillstand})} \Big) \varphi_2/\varphi_3$$

$$(\text{tbos2})$$

oder

$$t_3^{(\text{Beginn des Materialmangels})} - t_2^{(\text{Beginn des angehaltenen Ausstoßes})} \geq$$

$$\Delta t^{(23)(\text{kein Rückstau})} + \Big( t_2^{(\text{Beginn des angehaltenen Ausstoßes})} -$$

$$t_2'^{(\text{Wiederaufnahme des Ausstoßes})(\text{Vorgängerstillstand})} \Big)(\varphi_2/\varphi_3 - 1)$$

$$(\text{EW7})$$

bzw. mit Berücksichtigung der statistischen Schwankungen

$$t_3^{(\text{Beginn des Materialmangels})} - t_2^{(\text{Beginn des angehaltenen Ausstoßes})}$$

$$\geq \Delta t_{\min}^{(23)(\text{kein Rückstau})}$$

$$+ \Big( t_2^{(\text{Beginn des angehaltenen Ausstoßes})}$$

$$- t_2'^{(\text{Wiederaufnahme des Ausstoßes})(\text{Vorgängerstillstand})} \Big)(\varphi_2/\varphi_3$$

$$- 1)_{\min}$$

$$(\text{EW7}')$$

Erinnert sei daran, dass (EW5) und (EW7) unter der Annahme 1) hergeleitet wurden, dass M3 bei Eintreffen der letzten Flasche vor Beginn des aktuellen Stillstands von M2 läuft.

(Vgap) und damit (EW7) gilt unter der zusätzlichen Einschränkung, dass während der gesamten Zeit $t_2^{(\text{Beginn des angehaltenen Ausstoßes})} - t_2'^{(\text{Wiederaufnahme des Ausstoßes})(\text{Vorgängerstillstand})}$ der einheitliche Fluss $\varphi_2$ vorherrscht, der nach einem Stillstand von M2 initial von der Steuereinrichtung 13 gewählt würde (dieser ist stets grösser als der Fluss im Gleichgewichtszustand, weil ja zunächst einmal ein Puffer vor M3 aufgebaut werden muss). Tatsächlich wird die Steuereinrichtung 13 bei sehr langen Zeiträumen $t_2^{(\text{Beginn des angehaltenen Ausstoßes})} - t_2'^{(\text{Wiederaufnahme des Ausstoßes})(\text{Vorgängerstillstand})}$ diesen Fluss abregeln, weil sonst u.U. die maximale Staulänge vor M3 überschritten würde. Für so große Zeiträume könnte man $\varphi_2$ durch einen über den betrachteten Zeitraum $\left(t_2^{(\text{Beginn des angehaltenen Ausstoßes})} - t_2'^{(\text{Wiederaufnahme des Ausstoßes})(\text{Vorgängerstillstand})}\right)$ integrierten zeitabhängigen Ausstoß $\varphi_2(t)$ ersetzen, was allerdings eine explizite Messung des Ausstoßes als Funktion der Zeit über einen gewissen Zeitraum (Anfahrphase bis zum Erreichen des Gleichgewichtszustands) hinweg erfordert. Dies wird diskutiert im Zusammenhang mit der unten folgenden Verallgemeinerung auf eine Aggregats-Kette.

Einfacher ist es, zu verwenden, dass der frühest mögliche Stillstand von M3 immer durch die kleinere der durch (EW7) bzw. (EW5) vorhergesagten Zeiten abgeschätzt werden kann. In der Tat, wenn (EW7) nicht mehr zutrifft, weil $\varphi_2$ zu einem bestimmten Zeitpunkt vor $t_2^{(\text{Beginn des angehaltenen Ausstoßes})}$ abgeregelt wurde, dann heißt das, dass zu diesem Zeitpunkt der maximale erlaubte Puffer vor M3 vorlag. Dieser wird sich im weiteren Verlauf wieder reduzieren unter der Wirkung der Steuereinrichtung 13, aber nicht unter das Volumen Puffer_2, so dass (EW5) anwendbar ist. Also hat man

$$t_3^{(\text{Beginn des Materialmangels})} - t_2^{(\text{Beginn des angehaltenen Ausstoßes})} \geq$$
$$\Delta t^{(23)(\text{kein Rückstau})} + \min\left\{\left(t_2^{(\text{Beginn des angehaltenen Ausstoßes})} - t_2'^{(\text{Wiederaufnahme des Ausstoßes})(\text{Vorgängerstillstand})}\right)\left(\frac{\varphi_2}{\varphi_3} - 1\right), \Delta t^{(23)(\text{Reduktion des Puffer\_2})} - \Delta t^{(\text{kein Rückstau})(\text{Puffer\_2}\to\text{M3})}\right\}$$

$$(\text{EW8})$$

bzw. mit Berücksichtigung der statistischen Schwankungen,

$$t_3^{(\text{Beginn des Materialmangels})} - t_2^{(\text{Beginn des angehaltenen Ausstoßes})} \geq$$
$$+ \Delta t_{\min}^{(23)(\text{kein Rückstau})} + \min\left\{\left(t_2^{(\text{Beginn des angehaltenen Ausstoßes})} - t_2'^{(\text{Wiederaufnahme des Ausstoßes})(\text{Vorgängerstillstand})}\right)\left(\frac{\varphi_2}{\varphi_3} - 1\right)_{\min}, \Delta t_{\min}^{(23)(\text{Reduktion des Puffer\_2})} - \Delta t_{\max}^{(23)(\text{kein Rückstau})(\text{Puffer\_2}\to\text{M3})}\right\}$$

$$(\text{EW8}')$$

Die rechte Seite von (EW8), (EW8') sollte eine monoton steigende Funktion von

$$\delta t_{\text{dist}} := t_2^{(\text{Beginn des angehaltenen Ausstoßes})} -$$

$$t'_2^{(\text{Wiederaufnahme des Ausstoßes})(\text{Vorgängerstillstand})}$$

sein, was immer der Fall ist, solange $(\varphi_2/\varphi_3)_{\min} \geq 1$. Da der Unterschied zwischen $\varphi_2$ und $\varphi_3$ erheblich sein sollte, sollte dies stets erfüllt sein.

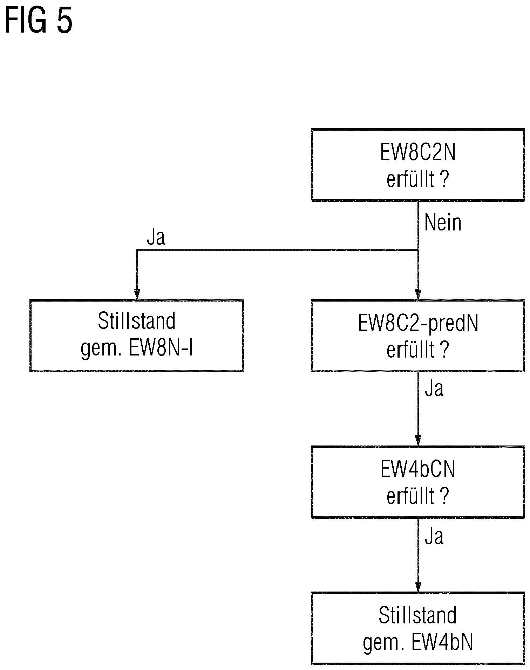

Die obenstehenden Betrachtungen wurden angestellt unter der Voraussetzung eines laufenden M3 bei Eintreffen der letzten Flasche, die von M2 vor dem Eintreten des Stillstands von M2 abging. Deshalb kann (EW4b) hier nicht auftreten. Der entsprechende Entscheidungsbaum bzw. die entsprechenden Schritte, welche von der Ermittlungseinheit 152 abgearbeitet werden, sind in Fig. 5 illustriert, allerdings bereits verallgemeinert für N Aggregate.

Man kann die folgende hinreichende Bedingung aufstellen für das Vorliegen dieser Voraussetzung:

• Bei Eintreffen der ersten Flasche nach Ende des Vorgängerstillstands bei M3 steht M3 nicht. (EW8C1)

oder

• Bei Eintreffen bei M3 der ersten Flasche nach Ende des Vorgängerstillstands steht M3, aber

$$t_2^{(\text{Beginn des angehaltenen Ausstoßes})} - t'_2^{(\text{Wiederaufnahme des Ausstoßes})(\text{Vorgängerstillstand})} \geq$$

$$\widetilde{\Delta t}^{(\text{Puffer\_1 Aufbau})(\text{M3 angehalten})}$$

$$(\text{EW8C2})$$

(Der Tilde operator bezeichnet eine von zwei möglichen Definitionsvarianten für die Zeit zum Aufbau von Puffer_1; einmal läuft die Uhr los, wenn die erste Flasche bei M3 angekommen ist bei noch leerem Puffer, und einmal läuft die Uhr los, wenn die erste zuströmende Flasche bei noch leerem Puffer die Marke überschreitet, die dem Puffer_1 entspricht. Letztere Variante entspricht dem hiesigen tilde Operator, wie man an (BB1) sieht.)

bzw. mit Berücksichtigung statistischer Schwankungen,

$$t_2^{(\text{Beginn des angehaltenen Ausstoßes})} -$$

$$t'_2^{(\text{Wiederaufnahme des Ausstoßes})(\text{Vorgängerstillstand})} \geq$$

$$\widetilde{\Delta t}_{\max}^{(\text{Puffer\_1 Aufbau})(\text{M3 angehalten})}$$

$$(\text{EW8C2'})$$

Dabei ist $\widetilde{\Delta t}_2^{(\text{Puffer\_1 Aufbau})(\text{M3 angehalten})}$ die Zeit zum Aufbau von Puffer_1 bei stehendem M3, und es gilt

$$\widetilde{\Delta t}_2^{(\text{Puffer\_1 Aufbau})(\text{M3 angehalten})} = V_{\text{Puffer\_1}}/\varphi_2$$

$$(\text{BB1})$$

Genauer ist es die Zeit, während derer M2 unterbrechungsfreien Ausstoß leisten muss, wenn die erste von M2 ausgehende Flasche auf einen verschwindenden Puffer vor M3 trifft. $\widetilde{\Delta t}_{2\ \min}^{(\text{Puffer\_1 Aufbau})(\text{M3 angehalten})}$ ist ein messbares Stammdatum.

(EW8C2) ist also unabhängig von der Verursachung eines Stillstands von M3 durch den Vorgängerstillstand von M2 hinreichend für die Gültigkeit von (EW8). Sollte bei Eintreffen der ersten Flasche nach Ende des Vorgängerstillstands bereits ein Puffer vor M3 bestehen, würde sogar ein geringerer Abstand als $\widetilde{\Delta t}_{2\ \max}^{(\text{Puffer\_1 Aufbau})(\text{M3 angehalten})}$ genügen, aber (EW8C2) gibt ein stets gültiges hinreichendes Kriterium an dafür, dass M3 wieder anfährt nach dem Ende des letzten Stillstands.

Sollte (EW8C2) verletzt sein UND bei Eintreffen der ersten Flasche nach Ende des Vorgängerstillstands bei M3 steht M3 (Verletzung von (EW8C1)), dann reicht die Zeit u.U. nicht aus, um Puffer_1 wieder zu erreichen, bis sich der aktuelle Stillstand von M2 auswirkt bei M3. Eine geringe Verletzung von (EW8C2) wird sich allerdings nur dann auswirken, wenn nur ein sehr kleiner oder verschwindender Puffer vor M3 vorhanden ist bei Eintreffen der ersten Flasche nach Ende des Vorgängerstillstands. Dann aber dauert es in Abwesenheit des aktuellen Stillstands auch länger, bis der minimale Puffer Puffer_1 aufgebaut ist, und das ist per definitionem der Zeitpunkt, zu dem eine Verlängerung des Stillstands von M3 sichtbar werden würde.

Vom Zeitpunkt $t_2'^{\text{(Wiederaufnahme des Ausstoßes)(Vorgängerstillstand)}}$ aus gesehen, ist der mögliche Auswirkungszeitpunkt

$$t_3^{\text{(Beginn des Verlängerns des Materialmangels)}} = t_2'^{\text{(Wiederaufnahme des Ausstoßes)(Vorgängerstillstand)}} + \Delta t^{\text{(kein Rückstau)(M2}\rightarrow\text{Puffer\_1)}} + \widetilde{\Delta t}_2^{\text{(Puffer\_1 Aufbau)(M3 angehalten)(dyn)}}$$

$$\text{(BOSP)}$$

Dabei ist $\widetilde{\Delta t}_2^{\text{(Puffer\_1 Aufbau)(M3 angehalten)(dyn)}}$ kein Stammdatum, sondern die dynamisch variable Zeit, die benötigt würde, um (nach Ankunft der ersten Flasche nach Ende des Vorgängerstillstands von M2 an der Marke Puffer_1) von irgendeinem gegebenen Anfangspuffer von M3 aus den Minimalpuffer Puffer_1 aufzubauen. Diese Zeit steht natürlich real nicht zur Verfügung, wenn der Aufbauprozess durch den aktuellen Stillstand von M2 unterbrochen wird.

Der Anfangspuffer bestimmt die minimale Verletzung von (EW8C2), die gegeben sein muss, damit überhaupt eine Stillstandsverlängerung eintreten kann. Umgekehrt definiert eine gegebene Verletzung von (EW8C2) einen maximalen Anfangspuffer, der noch zu einer Stillstandsverlängerung führen würde und damit ein minimales $\widetilde{\Delta t}_2^{\text{(Puffer\_1 Aufbau)(M3 angehalten)(dyn)}}$. Mit wachsender Verletzung von (EW8C2) steigt also der minimale Wert von $\widetilde{\Delta t}_2^{\text{(Puffer\_1 Aufbau)(M3 angehalten)(dyn)}}$, der zu einer Stillstandsverlängerung gehören kann. Der früheste absolute Zeitpunkt $t_3^{\text{(Beginn des Verlängerns des Materialmangels)}}$ tritt ein für $\widetilde{\Delta t}_2^{\text{(Puffer\_1 Aufbau )(M3 angehalten)(dyn)}} = 0$, was auf (EW4b) zurück führt. Dies ist aber nur möglich, wenn $t_2^{\text{(Beginn des angehaltenen Ausstoßes)}} - t_2'^{\text{(Wiederaufnahme des Ausstoßes)(Vorgängerstillstand)}} = 0$, sonst würde M3 wieder anfahren.

Der bei stehendem M3 aufgebaute Puffer gehorcht der Beziehung

$$\varphi_2 \cdot \left( t_2^{\text{(Beginn des angehaltenen Ausstoßes)}} - t_2'^{\text{(Wiederaufnahme des Ausstoßes)(Vorgängerstillstand)}} \right) = V_{\text{Puffer\_3}-s}$$

$$\text{(VPuffer\_3-S)}$$

sofern dieser Wert nicht $V_{\text{Puffer\_2}}$ übersteigt, was er nicht kann, denn nach Annahme kann $V_{\text{Puffer\_3}-s}$ nicht einmal $V_{\text{Puffer\_1}}$ übersteigen, sonst würde M3 wieder anfahren. Es ist andererseits

$$\widetilde{\Delta t}_2^{\texttt{(Puffer\_1 Aufbau)(M3 angehalten)(dyn)}} = \left(V_{\texttt{Puffer\_1}} - V_0\right)/\varphi_2$$

$$(\text{V0})$$

wobei $V_0$ der unbekannte Puffer bei Ankunft der ersten Flasche nach Ende des Vorgängerstillstands ist. Es muss

$$V_0 + V_{\texttt{Puffer\_3-S}} \leq V_{\texttt{Puffer\_1}}$$

$$(\text{V0}')$$

sein, damit M3 nicht wieder anfährt, also $V_{\text{Puffer\_1}} - V_0 \geq V_{\text{Puffer\_3-s}}$ und damit

$$\widetilde{\Delta t}_2^{\texttt{(Puffer\_1 Aufbau)(M3 angehalten)(dyn)}} \geq \left( t_2^{(\text{Beginn des angehaltenen Ausstoßes})} - t'^{(\text{Wiederaufnahme des Ausstoßes})(\text{Vorgängerstillstand})}_2 \right)$$

$$(\texttt{Buffer1B-dyn})$$

woraus schließlich mit (BOSP)

$$t_3^{\texttt{(Beginn des Verlängerns des Materialmangels)}} - t_2^{(\text{Beginn des angehaltenen Ausstoßes})}$$
$$\geq \Delta t^{\texttt{(kein Rückstau)(M2}\rightarrow\texttt{Puffer\_1 )}}$$

$$(\texttt{EW4b1})$$

folgt. In der Tat, $t_2^{(\text{Beginn des angehaltenen Ausstoßes})} + \Delta t^{(23)(\text{kein Rückstau})(\text{M2}\rightarrow\text{Puffer\_1})}$ ist der Zeitpunkt, zu dem die letzte Flasche vor Eintritt des Stillstands von M2 am größtmöglichen Puffer vor M3 ankommt, der noch mit stillstehendem M3 vereinbar wäre. Unter Berücksichtigung der statistischen Unsicherheit wird dies zu:

$$t_3^{\texttt{(Beginn des Verlängerns des Materialmangels)}} - t_2^{(\text{Beginn des angehaltenen Ausstoßes})}$$
$$\geq \Delta t_{\min}^{(23)\texttt{(kein Rückstau)(M2}\rightarrow\texttt{Puffer\_1)}}$$

$$(\texttt{EW4b1}')$$

(EW4b1) und (EW4b1') sind nur anwendbar, so lange (EW8C2) verletzt ist, also $t_2^{\texttt{(Beginn des angehaltenen Ausstoßes)}} - t'^{\texttt{(Wiederaufnahme des Ausstoßes)(Vorgängerstillstand)}}_2 < \widetilde{\Delta t}_{2\ \max}^{\texttt{(Puffer\_1 Aufbau )(M3 angehalten)}}$, sonst würde mit Sicherheit M3 wieder angelaufen sein, bevor die letzte Flasche vor Beginn des aktuellen Stillstands von M2 am Stau vor M3 eintrifft, und damit könnte keine Stillstandsverlängerung mehr stattfinden. (EW4b1') gibt aber in jedem Fall nur die Möglichkeit einer Stillstandsverlängerung an und bedeutet nicht zwangsweise, dass diese auch stattfindet, wenn (EW8C2) verletzt ist. Es könnte etwa trotzdem (EW8C1) erfüllt sein. Nun ist es zwar einfach, die Verletzung von (EW8C2) festzustellen, da (EW8C2) nur messbare Betriebs- und/oder Stammdaten enthält, aber nicht immer ohne zusätzliche Daten möglich, mit Sicherheit festzustellen, ob (EW8C1) verletzt ist, also ob M3 bei Eintreffen der ersten Flasche nach Ende des Vorgängerstillstands von M2 bei M3 steht oder stehen wird.

Falls zwar (EW8C2) verletzt ist, aber nichts bekannt ist über (EW8C1), dann kann nur Folgendes ausgesagt werden (siehe Fig. 5):

- Falls M3 erst als Folge des aktuellen Stillstands von M2 zum Stehen kommen wird, kann dies frühestens nach der durch (EW8) gegebenen Vorwarnzeit geschehen.
- Falls M3 schon steht bei Eintreffen der ersten Flasche nach Ende des Vorgängerstillstands von M2, dann wird eine Verlängerung dieses Stillstands über das ohne das Auftreten des aktuellen Stillstands von M2 zu erwartende Ende hinaus auftreten mit einer Vorwarnzeit, die durch (EW4b1) gegeben ist.

Natürlich gibt es Fälle, in denen die vorhandene Information zur Entscheidung zwischen den beiden Möglichkeiten ausreicht. Insbesondere weiß man, dass die zweite Möglichkeit vorliegen muss, wenn erstens (1) der Vorgängerstillstand bei M2 so lange gedauert hat, dass er auch bei maximalem Puffer vor M3 zu dessen völliger Entleerung geführt haben muss bzw. zukünftig noch führen muss sofern M3 nicht bereits steht, und zweitens (2) gesichert ist, dass M3 in der Tat nicht bereits steht beim Eintreffen der letzten Flasche vor Beginn des Vorgängerstillstands von M2. Die letztere Bedingung kann abgesichert werden durch die Forderung, dass vor Beginn des Vorgängerstillstands von M2 genügend lange Betrieb von M2 vorherrschte mit dem Ausstoß $\varphi_2$, um einen eventuellen Stillstand von M3 sicher aufzuheben. Dazu fordert man wiederum (EW8C2), nun aber angewandt auf den Vorgängerstillstand von M2, also (zweite Bedingung (2))

$$t_2^{(\text{Beginn des angehaltenen Ausstoßes})(\text{Vorgängerstillstand})} - t_2'^{(\text{Wiederaufnahme des Ausstoßes})(\text{Vor-Vorgänger})} \geq \widetilde{\Delta t}^{(\text{Puffer\_1 Aufbau})(\text{M3 angehalten})}$$

$$(\text{EW8C2.1- pred})$$

bzw. mit Berücksichtigung statistischer Schwankungen,

$$t_2^{(\text{Beginn des angehaltenen Ausstoßes})(\text{Vorgängerstillstand})} - t_2'^{(\text{Wiederaufnahme des Ausstoßes})(\text{Vor-Vorgänger})} \geq \widetilde{\Delta t}_{\max}^{(\text{Puffer\_1 Aufbau})(\text{M3 angehalten})}$$

$$(\text{EW8C2.1- pred'})$$

Die erste Bedingung (erste Bedingung (1)) führt auf

$$\left( t_2'^{(\text{Wiederaufnahme des Ausstoßes})(\text{Vorgängerstillstand})} - t_2^{(\text{Beginn des angehaltenen Ausstoßes})(\text{Vorgängerstillstand})} \right) \geq \Delta t^{(\text{Reduktion des max Puffers})} - \Delta t^{(23)(\text{kein Rückstau})(\text{max Puffer}\to\text{M3})}$$

$$(\text{EW4bC})$$

bzw.

$$\left( t_2^{\prime (\text{Wiederaufnahme des Ausstoßes})(\text{Vorgängerstillstand})} - t_2^{(\text{Beginn des angehaltenen Ausstoßes})(\text{Vorgängerstillstand})} \right) \geq$$

$$\Delta t_{\max}^{(\text{Reduktion des max Puffers})} - \Delta t_{\min}^{(23)(\text{kein Rückstau})(\text{max Puffer}\to\text{M3})}$$

$$(\text{EW4bC}')$$

und gleichzeitig muss (EW8C2') stark verletzt sein in dem Sinne, dass

$$t_2^{(\text{Beginn des angehaltenen Ausstoßes})} - t_2^{\prime (\text{Wiederaufnahme des Ausstoßes})(\text{Vorgängerstillstand})} < \widetilde{\Delta t}_{2\ \min}^{(\text{Puffer\_1 Aufbau })(\text{M3 angehalten})}$$

$$(\underline{\text{EW8C2}'})$$

Dabei ist $\Delta t_{\max}^{(\text{Reduktion des max Puffers})}$ die (unter Berücksichtigung statistischer Schwankungen maximale) Zeit, die eine Flasche braucht, um einen Stau maximaler Länge zu durchqueren bis zum Eingang von M3, und $\Delta t_{\min}^{(23)(\text{kein Rückstau})(\text{max Puffer}\to\text{M3})}$ die (minimale) Zeit, um von der Staumarke des maximalen Puffers unbehindert (ohne Stau) die gleiche Strecke zurückzulegen. Beides sind messbare Stammdaten.

(EW8C2-pred), (EW4bC) und (EW8C2) bzw. (EW8C2-pred'), (EW4bC) und (EW8C2') sichern zusammen die Gültigkeit von (EW4b1) bzw. (EW4b1') ab. Allerdings sind die drei Bedingungen nur ein hinreichendes, aber nicht notwendiges Kriterium für das Vorliegen der zweiten Möglichkeit. Dies ist aber eine Folge der bewussten Einschränkung auf reine Statusdaten der Aggregate M1 - MN der Produktionsanlage 10 im Gegensatz zu dynamischen Pufferfüllstandsdaten, die zusätzliche Messeinrichtungen und deren elektronische und netzwerktechnische Verbindung mit der Ermittlungseinheit 152 und ggf. weiterer Komponenten der Produktionsanlage 10 erfordern würden.

Ähnlich kann man hinreichende Kriterien für den Fall aufstellen, dass der Vorvorgänger-Stillstand von M2 sicher einen Stillstand von M3 verursacht hat UND die Lücke zwischen Vorvorgänger-Stillstand und Vorgänger-Stillstand nicht ausreicht, um den Stillstand von M3 aufzuheben, bzw. analog für beliebig vorgelagerte Vorgänger-Stillstände. Dies wird hier nicht im Einzelnen ausgeführt.

Festzuhalten ist, dass bei Auftreten einer Kette von M2-Stillständen, innerhalb derer immer die Abstandsbedingung (EW8C2) verletzt ist, auf jeden Fall für das erste (früheste) Element der Kette (EW7) anwendbar ist. Man kann den Standpunkt beziehen, dass so eng aufeinanderfolgende Stillstände normalerweise eine gemeinsame Ursache habe ("stotternder" oder "Staccato"-Betrieb eines bestimmten Aggregats) und daher ein Eingreifen des Betreibers gleich bei Bekanntwerden der ersten, rein auf (EW7) basierenden Vorwarnung dazu führen wird, dass die nachfolgenden Stillstände gleich mit verhindert werden.

Allerdings gilt das vollständig nur insoweit, wie der Anlagenbetreiber überhaupt die Möglichkeit hat, auf Basis von (EW8) noch präventiv einzugreifen, also das Zustandekommen des Stillstands von M3 noch zu verhindern. Dies wird im Folgenden analysiert.

II) Stillstandsprävention

Die folgende Betrachtung bezieht sich nur auf den Fall der echten Stillstandsprävention, also der Verhinderung des Eintretens eines Stillstands, und nicht der Verhinderung der Verlängerung eines bestehenden Stillstands. Die Verlängerung eines bestehenden Stillstands tritt immer schon ein bei einem beliebig kurzen Stillstand von M2, kann also nicht verhindert werden.

Um das Eintreten des Stillstands von M3 wegen Materialmangels noch abzuwenden, ist es nicht ausreichend, zu wissen, wann M3 stehen bleiben wird. Das Vorliegen eines positiven Ausdrucks für $t_3^{(\text{Beginn des Materialmangels})} - t_2^{(\text{Beginn des angehaltenen Ausstoßes})}$ auf der rechten Seite von (EW7) bedeutet nicht, dass man mit dem Eingreifen bei M2 genauso lange warten kann. Die Bedingung für die Verhinderung eines durch den betrachteten Stillstand von M2 eintretenden Stillstands von M3 ist, dass die erste Flasche, die nach Beseitigung des Stillstands von M2 durch rechtzeitigen Eingriff wieder von M2 losläuft, M3 vor dem Beginn des Stillstands von M3 erreicht, also (gerade) noch auf einen nichtverschwindenden Puffer trifft. Hingegen kann die Verlängerung eines beim Eintreffen der letzten Flasche vor Beginn des Stillstands von M2 bereits bestehenden Stillstands von M3 nicht durch rechtzeitiges Eingreifen verhindert werden. Deshalb beschränkt sich die folgende Betrachtung auf den ersteren Fall, auch wenn man bei Eintritt von $t_2^{\text{(Beginn des angehaltenen Ausstoßes)}}$ nicht immer entscheiden kann, ob der erstere oder der letztere Fall vorliegt. Im Zweifel muss dann der Anlagensteuerer eine generelle oder Einzelfallbezogene Entscheidung treffen, ob er präventive Aktionen einleiten will oder nicht.

Anschließend an die Herleitung von (EW7) kann folgende Überlegung angestellt werden: Die kürzeste Reisedauer für eine Flasche, die nach Ende des aktuellen Stillstands von M2 losläuft, ist offensichtlich

$$\Delta t^{(M2 \to M3\ \text{min})} = \Delta t^{(23)\text{(kein Rückstau)}}$$

$$\text{(M2M3min)}$$

Andererseits kann diese kürzeste Reisedauer auch nur dann verlängert werden, wenn die Flasche irgendwo zwischen M2 und M3 auf einen Stau trifft. Das Stauende entspricht dann notwendigerweise der letzten Flasche vor Beginn des aktuellen Stillstands von M2. Dann aber hat die erste Flasche nach Ende des aktuellen Stillstands bereits die letzte Flasche vor Beginn des aktuellen Stillstands eingeholt. Das heißt unter Berücksichtigung von (EW8), wenn die erste Flasche losläuft zu einem spätesten Zeitpunkt

$$t_2^{\text{(Letzte Eingriffsmöglichkeit)}} =$$
$$t_2^{\text{(Beginn des angehaltenen Ausstoßes)}} + \min\left\{\left(t_2^{\text{(Beginn des angehaltenen Ausstoßes)}} - \right.\right.$$
$$t_2'^{\text{(Wiederaufnahme des Ausstoßes)(Vorgängerstillstand)}}\right)\left(\frac{\varphi_2}{\varphi_3} - \right.$$
$$\left.1\right), \Delta t^{(23)\text{(Reduktion des Puffer\_2)}} - \Delta t^{(23)\text{(kein Rückstau)(Puffer\_2} \to \text{M3)}}\Bigg\}$$

$$\text{(tlastin-}$$

$$\text{terv23)}$$

dann kommt sie entweder noch gleichzeitig an bei M3 mit der letzten Flasche vor Beginn des aktuellen Stillstands von M2, oder sie braucht nur deswegen länger, weil sie die letzte Flasche schon vorher eingeholt hat.

Die längste Vorwarnzeit, für die die Stillstandsprävention noch garantiert werden kann, ist also

$$t_2^{\text{(Letzte Eingriffsmöglichkeit)}} - t_2^{\text{(Beginn des angehaltenen Ausstoßes)}} =$$
$$\min\left\{\left(t_2^{\text{(Beginn des angehaltenen Ausstoßes)}} - \right.\right.$$
$$t_2'^{\text{(Wiederaufnahme des Ausstoßes)(Vorgängerstillstand)}}\right)\left(\frac{\varphi_2}{\varphi_3} - \right.$$
$$\left.1\right), \Delta t^{(23)\text{(Reduktion des Puffer\_2)}} - \Delta t^{\text{(kein Rückstau)(Puffer\_2} \to \text{M3)}}\Bigg\}$$

$$\text{(EW9)}$$

bzw. unter Berücksichtigung der statistischen Schwankungen

$$t_2^{(\text{Letzte Eingriffsmöglichkeit})} - t_2^{(\text{Beginn des angehaltenen Ausstoßes})} =$$

$$\min\left\{\left(t_2^{(\text{Beginn des angehaltenen Ausstoßes})} - \right.\right.$$

$$\left.t'_2^{(\text{Wiederaufnahme des Ausstoßes})(\text{Vorgängerstillstand})}\right)\left(\frac{\varphi_2}{\varphi_3} - \right.$$

$$\left.1\right)_{\min}, \Delta t_{\min}^{(23)(\text{Reduktion des Puffer\_2})} - \Delta t_{\max}^{(\text{kein Rückstau})(\text{Puffer\_2}\rightarrow\text{M3})}\right\}$$

$$(EW9')$$

(EW9) und (EW9') gelten sicher nur unter der bekannten Voraussetzung (EW8C2), weil auf (EW8) zurückgegriffen wurde. Wenn (EW8C2) verletzt ist, kann der Fall eintreten, dass M3 steht sowohl bei Eintreffen der ersten Flasche nach Ende des Vorgängerstillstands von M2 wie bei Eintreffen der letzten Flasche vor Beginn des aktuellen Stillstands von M2. Dann müsste zur Verhinderung einer Stillstandsverlängerung die erste Flasche nach Ende des aktuellen Stillstands von M2 die letzte Flasche vor Ende dieses Stillstands einholen. Das ist aber unmöglich, wenn der aktuelle Stillstand nicht die Länge Null hat, denn beide Flaschen bewegen sich unbehindert von einem Stau und folglich mit derselben Geschwindigkeit. Das heißt, die Verhinderung einer Stillstandsverlängerung ist i.a. nicht möglich.

Kette von Aggregaten mit Aggregaten M1 bis MN (Verallgemeinerung der vorstehenden Konstellation)

Die obige Betrachtung für ein Paar aufeinanderfolgender Aggregate kann nun ausgedehnt werden auf eine ganze Kette von Aggregaten (siehe Fig. 1). Es wird explizit nur der Fall einer linearen Kette ohne Verzweigungen betrachtet, jedoch kann die angewandte Verfahrensweise verallgemeinert werden für das Auftreten von Verzweigungen.
Sei M1 das Aggregat am Beginn der Kette und MN das Bottleneck.
Für jedes Aggregat zwischen M1 und MN soll zum Zwecke der Herleitung der Beziehungen zunächst gelten (diese Einschränkung wird später aufgehoben): Im Zeitraum zwischen dem Eintreffen der ersten Flasche nach Ende des Vorgängerstillstands von M1 und der letzten Flasche vor dem Eintreten des aktuellen Stillstands von M1 soll kein Eigenfehler des Aggregats auftreten.
Für die Verallgemeinerung auf die Aggregat-Kette sind einige zusätzliche Betrachtungen erforderlich. Natürlich könnten die Ergebnisse für die Stillstandsvorhersage und die Stillstandsprävention für den bisher betrachteten einstufigen Fall direkt angewandt werden, indem man einfach wartet, bis der Stillstand beim letzten Aggregat vor dem Bottleneck-Aggregat auftritt und vorher nicht reagiert. Das würde aber für die Stillstandsprävention des Bottleneck-Aggregats wenig helfen, weil das letzte Aggregat vor dem Bottleneck i.a. nur deswegen nicht läuft, weil es kein Material mehr bekommt und daher dort gar nicht eingegriffen werden kann. Auch die Einschränkung auf die reine Vorhersage eines Bottleneck-Stillstands würde bei direkter Anwendung von (EW4b) bzw. (EW7) wertvolle Zeit verschenken.

I) Stillstandsvorhersage

Einer direkten Iteration von (EW8) von einer auf mehrere Etappen steht im Wege, dass die Größe

$$\delta t_{\text{dist},i} := \left(t_i^{(\text{Beginn des angehaltenen Ausstoßes})} - \right.$$
$$\left.t'_i^{(\text{Wiederaufnahme des Ausstoßes})(\text{Vorgängerstillstand})}\right)$$

i.a. nur für den Beginn der Kette, also für das erste Aggregat $i = 1$ bekannt ist. Für alle folgenden Aggregate können beide eingehenden Größen in der Zukunft liegen zum Zeitpunkt $t_1^{(\text{Beginn des angehaltenen Ausstoßes})}$, müssten also abgeschätzt werden.
Jedoch kann die zu (EW8) führende Überlegung direkt auf N Aggregate verallgemeinert werden, so dass (im Unterschied zu den Betrachtungen bei der konventionellen root cause analysis) die Notwendigkeit der Iteration entfällt.
Dazu betrachtet man wiederum die letzte Flasche vor Beginn des aktuellen Stillstands. Diese Flasche eilt dem gesamten in der Zwischenzeit seit dem Ende des letzten Stillstands von M1 ausgestoßenen Volumen hinterher. Dieses Volumen folgt notwendigerweise unterbrechungsfrei auf die erste Flasche nach Ende des Vorgängerstillstands, sofern wie angenommen die Aggregate M2...MN-1 keinen Eigenfehler aufweisen in der Zeit zwischen der Passage der ersten und der letzten Flasche nach Ende des Vorgängerstillstands. Damit weiß man aber, dass diese letzte Flasche zum

frühesten Zeitpunkt

$$t_{\text{last, arr.}} - t_{\text{1st, arr.}} = V_{\text{gap}}/\varphi_N$$

(tlastN)

bei M3 ankommt, wobei $V_{\text{gap}}$ das in der Lücke zwischen den zwei Stillständen von M1 ausgestoßene Volumen ist.

$t_{\text{last, arr.}}$ ist aber gleichzeitig der Beginn des Materialmangels, $t_{\text{last, arr.}} = t_N^{(\text{Beginn des Materialmangels})}$, und $t_{\text{1st, dep.}} = t_1^{(\text{Wiederaufnahme des Ausstoßes})(\text{Vorgängerstillstand})}$.

Es muss andererseits gelten

$$t_{\text{1st, arr}} - t_{\text{1st, dep.}} \geq \sum_{i=1}^{N-1} \Delta t^{(i,i+1)(\text{kein Rückstau})}$$

(t1stN)

so dass man insgesamt bekommt

$$t_N^{(\text{Beginn des Materialmangels})} - t'_1{}^{(\text{Wiederaufnahme des Ausstoßes})(\text{Vorgängerstillstand})}$$
$$\geq \sum_{i=1}^{N-1} \Delta t^{(i,i+1)(\text{kein Rückstau})} + V_{\text{gap}}/\varphi_N$$

(tbosN1)

Es ist nach Definition von $V_{\text{gap}}$

$$V_{\text{gap}} = \left( t_1^{(\text{Beginn des angehaltenen Ausstoßes})} - t'_1{}^{(\text{Wiederaufnahme des Ausstoßes})(\text{Vorgängerstillstand})} \right) \varphi_1$$

(Vgap)

sodass (tbosN1) wird zu

$$t_N^{(\text{Beginn des Materialmangels})} - t'_1{}^{(\text{Wiederaufnahme des Ausstoßes})(\text{Vorgängerstillstand})}$$
$$\geq \sum_{i=1}^{N-1} \Delta t^{(i,i+1)(\text{kein Rückstau})}$$
$$+ \left( t_1^{(\text{Beginn des angehaltenen Ausstoßes})} - t'_1{}^{(\text{Wiederaufnahme des Ausstoßes})(\text{Vorgängerstillstand})} \right) \varphi_1/\varphi_N$$

(tbosN2)

oder

$$t_N^{(\text{Beginn des Materialmangels})} - t_1'^{(\text{Beginn des angehaltenen Ausstoßes})} \geq$$
$$\sum_{i=1}^{N-1} \Delta t^{(i,i+1)(\text{kein Rückstau})} + \left( t_1^{(\text{Beginn des angehaltenen Ausstoßes})} - \right.$$
$$\left. t_1'^{(\text{Wiederaufnahme des Ausstoßes})(\text{Vorgängerstillstand})} \right) (\varphi_1/\varphi_N - 1)$$

$$(\mathrm{EW7N})$$

Dies ist zu vergleichen mit (EW7), auf das es sich im Spezialfall einer Etappe reduziert. Auch für (EW7N) besteht die Voraussetzung, dass MN zum Zeitpunkt des Eintreffens der letzten Flasche vor Beginn des aktuellen Stillstands von M1 laufen muss. Ebenso gilt für (EW7N) die analoge Einschränkung zu (EW7), dass der Fluss $\varphi_1$ gültig sein muss während der gesamten Dauer $\left( t_1^{(\text{Beginn des angehaltenen Ausstoßes})} - t_1^{(\text{Wiederaufnahme des Ausstoßes})(\text{Vorgängerstillstand})} \right)$, also nicht heruntergeregelt wird in dieser Zeit (für die nachfolgenden Flüsse gilt die Einschränkung nicht). Zu einem bestimmten Zeitpunkt nach $t_1^{(\text{Wiederaufnahme des Ausstoßes})(\text{Vorgängerstillstand})}$ wird der $V_{\text{Puffer}}$ vor M2 die obere Marke $V_{\text{Puffer, max}}$ (M2) erreichen, ab der die Steuereinrichtung 13 M1 abregelt. Danach wird der Puffer vor M2 sogar wieder sinken, jedoch nicht tiefer als das Volumen Puffer_2, solange der Stillstand von M1 nicht eintritt. Der ungünstigste Fall (kürzeste Reisezeit und damit Vorwarnzeit) tritt ein, wenn die letzte Flasche vor Beginn des aktuellen Stillstands von M1 gerade auf den Puffer $V_{\text{Puffer\_2}}$ (M2) trifft und in den nachfolgenden Strecken nur durch das vorauseilende Volumen $V_{\text{Puffer\_2}}$ (M2) verzögert wird. Dann aber führt eine zur Herleitung von (EW7N) ähnliche Betrachtung, bei der i.w. die Rolle von

$$\left( t_1^{(\text{Beginn des angehaltenen Ausstoßes})} - t_1'^{(\text{Wiederaufnahme des Ausstoßes})(\text{Vorgängerstillstand})} \right) \varphi_1 \text{ durch } V_{\text{Puffer\_2}} (\mathrm{M2})$$

übernommen wird, auf die Ungleichung

$$t_N^{(\text{Beginn des Materialmangels})} - t_1'^{(\text{Beginn des angehaltenen Ausstoßes})} \geq$$
$$\sum_{i=1}^{N-1} \Delta t^{(i,i+1)(\text{kein Rückstau})} - \Delta t^{(\text{Puffer\_2}\rightarrow M2)(\text{kein Rückstau})} + V_{\text{Puffer\_2}} (\mathrm{M2})/\varphi_N$$

$$(\mathrm{EW5N})$$

Diese stellt offenbar eine Verallgemeinerung von (EW5) dar. (EW5N) ist pessimistisch insofern, dass die Puffer vor den M2 nachfolgenden Aggregaten als sehr klein angenommen werden. Tatsächlich wird aber eine leistungsfähige Anlagensteuerung nach einem Stillstand von M1 nicht nur für einen ausreichenden Puffer vor M2 zu sorgen versuchen, sondern ebenso auch für alle nachfolgenden Aggregate bis hin zum bottleneck - sofern die Zeit dafür ausreicht. Das heißt, sie wird nach Erreichen von Puffer_2 für M2 nun auch das Aggregat M2 temporär hochregeln, um den Stand Puffer_2 von M3 zu erreichen usw. Bis zum Erreichen aller Puffer_2-Pufferstände bis hin zum bottleneck-Aggregat wird der Puffer vor M2 dann gar nicht über Gebühr ansteigen und kein Abregeln von M1 erfordern. Dann wäre entsprechend $V_{\text{Puffer\_2}}$ (M2)/$\varphi_N$ in (EW5N) zu ersetzen durch die Summe über alle Puffer_2-Pufferfüllstände, und es ergäbe sich die alternative, weniger pessimistische Version von (EW5N),

$$t_N^{(\text{Beginn des Materialmangels})} - t_1'^{(\text{Beginn des angehaltenen Ausstoßes})} \geq$$
$$\sum_{i=1}^{N-1} \Delta t^{(i,i+1)(\text{kein Rückstau})} + \sum_{i=2}^{N}\left(V_{\text{Puffer\_2}}(\text{M}i)/\varphi_N - \Delta t^{(\text{Puffer\_2}\to\text{M}i)(\text{kein Rückstau})}\right)$$

$$(\text{EW5N-V2})$$

(EW7N) gilt dann entsprechend länger. Was zutrifft, hängt offensichtlich ab von der genauen Auslegung der Anlagensteuerung, insbesondere davon, ob ein temporäres Hochregeln auch von M1 nachfolgenden Aggregaten geschieht. Auch wären noch andere Varianten anstelle von (EW5N), (EW5N-V2) denkbar. Der Fachmann ist ohne Weiteres in der Lage, die entsprechenden anlagenspezifischen Anpassungen vorzunehmen. Entsprechend kann man die zu (EW8) analoge Beziehung

$$t_N^{(\text{Beginn des Materialmangels})} - t_1^{(\text{Beginn des angehaltenen Ausstoßes})} \geq$$
$$\sum_{i=1}^{N-1} \Delta t^{(i,i+1)(\text{kein Rückstau})} + \min\left\{\frac{V_{\text{Puffer\_2}}(\text{M2})}{\varphi_N} - \Delta t^{(\text{Puffer\_2}\to M2)(\text{kein Rückstau})}, \left(t_1^{(\text{Beginn des angehaltenen Ausstoßes})} - t_1'^{(\text{Wiederaufnahme des Ausstoßes})(\text{Vorgängerstillstand})}\right)(\varphi_1/\varphi_N - 1)\right\}$$

$$(\text{EW8N})$$

aufstellen, bzw. mit Berücksichtigung statistischer Schwankungen

$$t_N^{(\text{Beginn des Materialmangels})} - t_1^{(\text{Beginn des angehaltenen Ausstoßes})} \geq$$
$$\sum_{i=1}^{N-1} \Delta t_{\min}^{(i,i+1)(\text{kein Rückstau})} + \min\left\{\frac{V_{\text{Puffer\_2}}(\text{M2})}{\varphi_{N,\max}} - \Delta t^{(\text{Puffer\_2}\to M2)(\text{kein Rückstau})}, \left(t_1^{(\text{Beginn des angehaltenen Ausstoßes})} - t_1'^{(\text{Wiederaufnahme des Ausstoßes})(\text{Vorgängerstillstand})}\right)(\varphi_1/\varphi_N - 1)_{\min}\right\}$$

$$(\text{EW8N}')$$

Legt man wiederum eine leistungsfähigere Anlagensteuerung zugrunde wie für (EW5N-V2), so erhält man entsprechend

$$t_N^{(\text{Beginn des Materialmangels})} - t_1^{(\text{Beginn des angehaltenen Ausstoßes})} \geq$$
$$\sum_{i=1}^{N-1} \Delta t^{(i,i+1)(\text{kein Rückstau})} + \min\left\{\sum_{i=2}^{N}\left\{\frac{V_{\text{Puffer\_2}}(\text{M}i)}{\varphi_N} - \Delta t^{(\text{Puffer\_2}\to\text{M}i)}\right\}, \left(t_1^{(\text{Beginn des angehaltenen Ausstoßes})} - t_1'^{(\text{Wiederaufnahme des Ausstosses})(\text{Vorgänger-Stillstand})}\right)(\varphi_1/\varphi_N - 1)\right\}$$

$$(\text{EW8N-V2})$$

bzw. mit Berücksichtigung statistischer Schwankungen

$$t_N^{(\text{Beginn des Materialmangels})} - t_1^{(\text{Beginn des angehaltenen Ausstoßes})}$$

$$\geq \sum_{i=1}^{N-1} \Delta t_{\min}^{(i,i+1)(\text{kein Rückstau})}$$

$$+ \min \left\{ \sum_{i=2}^{N} \left( \frac{V_{\text{Puffer\_2}}(\text{M}i)}{\varphi_{N,\max}} \right. \right.$$

$$- \Delta t_{\max}^{(\text{Puffer\_2}\rightarrow\text{M}i)(\text{kein Rückstau})} \Bigg), \left( t_1^{(\text{Beginn des angehaltenen Ausstoßes})} \right.$$

$$- t'_1^{(\text{Wiederaufnahme des Ausstoßes})(\text{Vorgänger-Stillstand})} \Bigg) (\varphi_1/\varphi_N$$

$$\left. \left. - 1 \right)_{\min} \right\}$$

$$(\text{EW8N-V2}')$$

Gemäß obenstehenden Bemerkungen ist klar, dass es je nach Anlagensteuerungsverhalten auch noch weitere Varianten geben kann. Man kann den fraglichen Term einfach als anlagenspezifische Größe, die durch Messungen zu bestimmen ist, auffassen und allgemein schreiben:

$$t_N^{(\text{Beginn des Materialmangels})} - t_1^{(\text{Beginn des angehaltenen Ausstoßes})} \geq$$

$$\sum_{i=1}^{N-1} \Delta t^{(i,i+1)(\text{kein Rückstau})} +$$

$$\min \left\{ \Delta t^{(\text{min Puffer})(\text{M2-M}N)}, \left( t_1^{(\text{Beginn des angehaltenen Ausstoßes})} - \right. \right.$$

$$t'_1^{(\text{Wiederaufnahme des Ausstoßes})(\text{Vorgänger-Stillstand})} \Bigg) (\varphi_1/\varphi_N - 1) \Bigg\}$$

$$(\text{EW8N-V})$$

Anstelle der etwas groben Betrachtung (EW8N-V), wo der Strom $\varphi_1$ als konstant angenommen wird, kann man auch eine etwas detaillierte Betrachtung anstellen. Diese ist gegeben durch

$$t_N^{(\text{Beginn des Materialmangels})} - t_1^{(\text{Beginn des angehaltenen Ausstoßes})} \geq$$

$$\sum_{i=1}^{N-1} \Delta t^{(i,i+1)(\text{kein Rückstau})} +$$

$$\int_{t'_1^{(\text{Wiederaufnahme des Ausstoßes})(\text{Vorgänger-Stillstand})}}^{t_1^{(\text{Beginn des angehaltenen Ausstoßes})}} \frac{\varphi_1(t) - \varphi_N}{\varphi_N} dt$$

$$(\text{EW8N-I})$$

Der Term $\Delta t^{(\text{min Puffer})(\text{M2-M}N)}$ entfällt, weil die Abregelung von $\varphi_1(t)$, die nach einer gewissen Zeit stattfindet, implizit in der Integralformel in (EW8N-I) berücksichtigt ist. $\varphi_1(t)$ ist i.a. nicht kontinuierlich messbar. Jedoch ist es mit begrenztem Aufwand möglich, während der Anlaufphase von M1 (bis zum Erreichen eines Gleichgewichtszustands) den Fluss tatsächlich zumindest an einigen Stützstellen zu vermessen bzw. den Aufbau des damit aufgebauten Volumens

$$V_1^{(\text{Anlaufphase})}(t) := \int_0^t dt' \varphi_1(t') \qquad (\text{V1rampup})$$

was relevant wird in der Ausprägung

$$V_1^{\text{(Anlaufphase)}}\left(t_1^{\text{(Beginn des angehaltenen Ausstoßes)}} - \right.$$

$$\left. t'_1{}^{\text{(Wiederaufnahme des Ausstoßes)(Vorgängerstillstand)}}\right) =$$

$$\int_{t'_1{}^{\text{(Wiederaufnahme des Ausstoßes)(Vorgängerstillstand)}}}^{t_1^{\text{(Beginn des angehaltenen Ausstoßes)}}} dt\, \varphi_1(t) \qquad\qquad (\text{V1rampup})$$

Dies ist z.B. im Fall von Abfüllanlagen möglich durch Zählen von Flaschen, was manuell oder durch eine geeignete optische Zähleinrichtung geschehen kann. Entscheidend ist, dass diese Messung nur einmal pro Aggregat vorgenommen werden muss und nicht wieder erneut während jeder Betriebsphase der Anlage. Die erhobenen Daten sind somit als Stammdaten verwendbar, die das näherungsweise immer gleiche Verhalten des Aggregats in der Anfahrphase nach einem Stillstand beschreiben.

Ist diese Funktion näherungsweise bekannt, so kann man statt (EW8N-V) die etwas genauere Form (EW8N-I) verwenden, die sich mit (V1rampup) auch schreiben lässt als

$$t_N^{\text{(Beginn des Materialmangels)}} - t_1^{\text{(Beginn des angehaltenen Ausstoßes)}} \geq$$

$$\sum_{i=1}^{N-1} \Delta t^{(i,i+1)\text{(kein Rückstau)}} + \frac{1}{\varphi_N}\left\{ V_1^{\text{(Anlaufphase)}}\left(t_N^{\text{(Beginn des Materialmangels)}} - \right.\right.$$

$$\left. t_1^{\text{(Beginn des angehaltenen Ausstoßes)}}\right) - \left(t_N^{\text{(Beginn des Materialmangels)}} - \right.$$

$$\left.\left. t_1^{\text{(Beginn des angehaltenen Ausstoßes)}}\right)\varphi_N\right\}$$

$$(\text{EW8N-I})$$

anwenden. (EW8N-I) ist natürlich äquivalent zu

$$t_N^{\text{(Beginn des Materialmangels)}} - t'_1{}^{\text{(Wiederaufnahme des Ausstoßes)(Vorgänger-Stillstand)}}$$

$$\geq \sum_{i=1}^{N-1} \Delta t^{(i,i+1)\text{(kein Rückstau)}}$$

$$+ \frac{1}{\varphi_N}\left\{ V_1^{\text{(Anlaufphase)}}\left(t_1^{\text{(Beginn des angehaltenen Ausstoßes)}}\right.\right.$$

$$\left.\left. - t'_1{}^{\text{(Wiederaufnahme des Ausstoßes)(Vorgänger-Stillstand)}}\right)\right\}$$

In dieser Form drückt (EW8N-I) aus, dass vor dem Beginn des Materialmangel-Stillstands von MN erst einmal das gesamte nach Ende des Vorgängerstillstands ausgesandte Volumen abgebaut sein muss, wobei im ungünstigsten Fall (kürzeste Vorwarnzeit) die erste Flasche nach Ende des Vorgängerstillstands ohne Verzögerung durch Staus durch die Kette läuft und die letzte Flasche der ersten nacheilt, getrennt von dieser durch ein Volumen

$$V_1^{\text{(Anlaufphase)}}\left(t_1^{\text{(Beginn des angehaltenen Ausstoßes )}}\right.$$

$$\left. t'_1{}^{\text{(Wiederaufnahme des Ausstoßes)(Vorgänger-Stillstand)}}\right).$$ Dessen (Mindest-)Abbauzeit ist gegeben durch den zweiten Term der obigen Beziehung. Dies bleibt wahr, wenn nicht alle Aggregate nach M1 bei Eintreffen der ersten Flasche nach Ende des Vorgängerstillstands im laufenden Zustand sind, denn erstens kommen diese wegen (EW8C2N) alle zum Laufen und zweitens verzögert sich die Ankunft dieser ersten Flasche bei MN durch das notwendige Erreichen einiger Mindestpuffer, während der zeitliche Abstand der letzten von der ersten Flasche dadurch nicht reduziert wird.

Initial wird M1 mit höherem Ausstoß laufen als im Gleichgewichtszustand der Anlage, mindestens dann, wenn die nachfolgenden Aggregate trotz des vorangegangenen Stillstands von M1 noch laufen bei Ankunft der ersten Flasche nach Ende des Stillstands, aber mit u.U. sehr stark reduziertem Puffer (z.B. nahe Null). Es muss dann der Gefahr eines Stillstands durch Materialmangel bei der geringsten weiteren Störung begegnet werden, also zunächst einmal wieder ein ausreichend großer Puffer aufgebaut werden. Da es aber meistens gar nicht ohne Weiteres möglich ist, den Fall noch laufender Aggregate bei Ankunft besagter erster Flasche auszuschließen, wird die Anlagenregelung nach einem Stillstand von M1 sicherheitshalber immer den Ausstoß von M1 temporär heraufregeln wie für den Fall noch laufender Aggregate. Nur bei einem sehr langen Vorgängerstillstand kann ohne Messung von Pufferfüllständen geschlossen werden, dass eine Reihe von Aggregaten, ggf. bis hin zum bottleneck, zwangsläufig in den Materialmangelzustand gefallen sein muss oder noch fallen wird, auch wenn sie zu Beginn des Vorgängerstillstands den höchstmöglichen Pufferfüllstand hatten. Wenn der Anlagensteuerung bekannt ist, dass eine Reihe von Aggregaten zwangsläufig in den Materialmangelzustand gefallen sein muss bzw. noch fallen wird, so wird sie trotzdem anfangs M1 hochregeln, um möglichst schnell die Mindestpufferfüllstände wieder zu erreichen, damit die Aggregate wieder anlaufen können. Sie könnte evtl. etwas früher wieder abregeln aufgrund des anfangs nicht stattfindenden Volumenabflusses. Aber der Puffer, den die letzte Flasche vor Beginn des aktuellen Stillstands insgesamt über die Kette hinweg mindestens zu durchqueren hat, sollte sich dadurch sinnvollerweise nicht verschlechtern, das heißt, die Verringerung von

$$V_1^{\text{(Anlaufphase)}}\left(t_1^{\text{(Beginn des angehaltenen Ausstoßes)}} - t'^{\text{(Wiederaufnahme des Ausstoßes)(Vorgänger-Stillstand)}}_1\right)$$

sollte bei korrekter Auslegung der Regelung mindestens kompensiert werden durch die zusätzliche Verzögerung der ersten Flasche durch den Aufbau der Mindestpuffer. Das bedeutet, es sollte erlaubt sein, erstens in jedem Fall mit (EW8N-I) zu arbeiten und zweitens mit einer einheitlichen Volumenaufbaufunktion $V_1^{\text{(Anlaufphase)}}(t)$ unabhängig vom vorliegenden Fall (nämlich mit der, die gültig ist für den Fall laufender Aggregate).

Eine plausible Auslegung der Regelung, die der obenstehenden Forderung genügt, ist die folgende:

Die Regelelektronik verfügt über eine Staumarke vor M2 (oberhalb des Mindestpufferfüllstands von M2), bei deren (gemessenen) Erreichen die anfängliche Hochregulierung von M1 auf den Normalwert zurückgefahren wird, unabhängig davon, ob die M1 nachfolgenden Aggregate bei Eintreffen der ersten Flasche nach Ende des Vorgängerstillstands alle laufen oder nicht.

Die Steuerung hält diesen Sollwert in etwa ein, solange der Zustrom von M1 besteht. Aufgrund von (EW8C2N) werden alle Aggregate zum Laufen gebracht, d.h. stehen nicht, wenn die letzte Flasche vor dem aktuellen Stillstand eintrifft. Dann ist offenbar die Laufzeit der letzten Flasche vor dem aktuellen Stillstand immer mindestens gleich der Reisezeit von der obigen Staumarke vor M2 bis zum Eingang von M2, plus der freien Reisezeit entlang der anderen Aggregate bis zu MN. Das entspricht gerade (EW8N-I) mit der Identifikation

$$V_1^{\text{(Anlaufphase)}}\left(t_1^{\text{(Beginn des angehaltenen Ausstosses)}} - t'^{\text{(Wiederaufnahme des Ausstosses)(Vorgänger-Stillstand)}}_1\right) =$$
$$\left(t_1^{\text{(Beginn des angehaltenen Ausstosses)}} - t'^{\text{(Wiederaufnahme des Ausstosses)(Vorgänger-Stillstand)}}_1 - \Delta t^{\text{(M2-Marke}\rightarrow\text{M2)(kein Rückstau)}}\right)\varphi_N + V^{\text{(M2-Marke}\rightarrow\text{M2)}}$$

$$(\text{V1Form})$$

Hier bedeuten $\Delta t^{\text{(M2-Marke}\rightarrow\text{M2)(kein Rückstau)}}$ die freie Reisezeit von der obigen Staumarke zum Eingang von M2 und $V^{\text{(M2-Marke}\rightarrow\text{M2)}}$ das zwischen der Staumarke und dem Eingang von M2 befindlichen Stauvolumen. Man rechnet sofort nach, dass dies in (EW8N-I) genau zur oben genannten Reisezeit der letzten Flasche führt. (V1Form) lässt folgende einfache Interpretation zu: Zunächst (also unmittelbar nach dem Ende des Vorgängerstillstands) findet ein über den Normalwert $\varphi_N$ erhöhter (konstanter) Ausstoß $\varphi_1$ von M1 statt. Wäre er niedriger, so würde der gesamte Term

$$\frac{1}{\varphi_N} \left\{ V_1^{(\text{Anlaufphase})} \left( t_1^{(\text{Beginn des angehaltenen Ausstoßes})} \right. \right.$$

$$\left. - t'_1{}^{(\text{Wiederaufnahme des Ausstoßes})(\text{Vorgängerstillstand})} \right)$$

$$- \left( t_1^{(\text{Beginn des angehaltenen Ausstoßes})} \right.$$

$$\left. \left. - t'_1{}^{(\text{Wiederaufnahme des Ausstoßes})(\text{Vorgängerstillstand})} \right) \varphi_N \right\}$$

in (EW8N-V2) negativ und damit die Zeit bis zum Eintreten des Materialmangel-Stillstands von MN kleiner als die unbehinderte Reisezeit der letzten Flasche. Das aber kann nicht sein, wenn die letzte Flasche immer auf ein laufendes Aggregat trifft auf ihrer Reise.

Dieser über den Normalwert $\varphi_N$ erhöhte (konstante) Ausstoß $\varphi_1$ von M1 findet statt während der Zeitspanne $\Delta t^{(\text{M2-Marke} \to \text{M2}) \, (\text{kein Rückstau})}$, mit $\varphi_1 \Delta t^{(\text{M2-Marke} \to \text{M2}) \, (\text{kein Rückstau})} = V^{(\text{M2-Marke} \to \text{M2})}$, so dass bei laufendem M2 das Stauvolumen $V^{(\text{M2-Marke} \to \text{M2})}$ aufgebaut werden kann. Danach und bis zum Beginn des aktuellen Stillstands (also während der Zeitspanne $t_1^{(\text{Beginn des angehaltenen Ausstoßes})} - t'_1{}^{(\text{Wiederaufnahme des Ausstoßes})(\text{Vorgänger-Stillstand})} - \Delta t^{(\text{M2-Marke} \to \text{M2}) \, (\text{kein Rückstau})}$) fließt nur noch der Normalausstoß $\varphi_N$, der dem Gleichgewichtszustand entspricht, wo genauso viel Volumen aus der Kette nach MN abfließt wie hineingeht. Es ist zu beachten, dass gemäß Herleitung von (EW8N-I) die Interpretation des zweiten Terms in (EW8N-I), $V_1^{(\text{Anlaufphase})} \left( t_N^{(\text{Beginn des Materialmangels})} - t_1^{(\text{Beginn des angehaltenen Ausstoßes})} \right) - \left( t_N^{(\text{Beginn des Materialmangels})} - t_1^{(\text{Beginn des angehaltenen Ausstoßes})} \right) \varphi_N$, die des Stauvolumens ist, das die letzte Flasche vor dem aktuellen Stillstand von M1, die der ersten seit Ende des Vorgängerstillstands lückenlos nacheilt, zu durchqueren hat zum Zeitpunkt ihres Eintreffens am Stauende.

Für die beispielhaft untersuchte Regelung sind also sowohl (EW8N-I) wie (EW8N) gültig, wobei allerdings in (EW8N) statt des minimalen unter normalen Betriebsbedingungen auftretenden Volumens $V_{\text{Puffer\_2}}$(M2) das (i.a. etwas höhere) Volumen $V^{(\text{M2-Marke} \to \text{M2})}$ zu setzen ist. Ebenso kann man ein Regelungsverhalten definieren, das (EW8N-V2) nahekommt. Die in (EW8N-V) erfolgte Ersetzung eines i.a. kontinuierlich hoch- und wieder abgeregelten Zuflusses $\varphi_1(t)$, wie er indirekt durch die Funktion $V_1^{(\text{Anlaufphase})}(t)$ wiedergegeben wird, durch einen während der Anfangsphase durchschnittlich gültigen konstanten Fluss $\varphi_1$ ist i.a. nur von kleiner quantitativer Auswirkung, könnte aber für bestimmte Anlagen von Bedeutung sein. Dies kann durch Untersuchung der genauen Regelstrategie der Anlage entschieden werden und damit auch, ob der höhere Aufwand für eine Vermessung von $V_1^{(\text{Anlaufphase})}(t)$ gerechtfertigt erscheint oder nicht.

Sollten Aggregate zwischen M1 und MN zum Stillstand kommen als Folge des aktuellen Stillstands von M1, so hat dies keine Auswirkung auf die Reisezeit der letzten Flasche vor Beginn des aktuellen Stillstands von M1 und damit auf den Eintritt des Stillstands von MN. Anders ist es, wenn Aggregate zwischen M1 und MN wegen Eigenfehlers ausfallen, nachdem der aktuelle Stillstand von M1 begonnen hat (wenn sie vorher ausfallen, werden sie selber zum Gegenstand einer Frühwarnung), aber bevor die letzte Flasche vor Eintritt des Stillstands von M1 an ihnen vorbeigelaufen ist (ist sie schon vorbeigelaufen, so bleibt offenbar ihre Ankunftszeit bei MN unbeeinträchtigt und damit jedenfalls die "worst case" Voraussage (EW8N-V) gültig).

In einem solchen Fall kann (EW8N-V) verwendet werden für diesen späteren Aggregatfehler bei einem Aggregat **k > 1** (Aggregate vor M1 spielen offensichtlich keine Rolle, denn wenn dort ein späterer technischer Aggregatfehler eintritt, so kann seine kausale Auswirkung offensichtlich nicht die des Stillstands von M1 überholen; ein früherer Aggregatfehler ist bereits in der allgemeinen Betrachtung für M1 berücksichtigt). Sei Mk das Aggregat, für das zuerst ein technischer Fehler nach dem Beginn des technischen Fehlers von M1 auftritt. Es gibt zwei Möglichkeiten: Entweder der als Konsequenz des Aggregatfehlers von Mk vorausgesagte frühest mögliche Stillstandszeitpunkt von MN gemäß (EW8N-V) liegt früher als der frühest mögliche Stillstandszeitpunkt von MN aufgrund des Aggregatfehlers von M1. Dann sollte er die bisherige Abschätzung überschreiben. Dabei muss allerdings bedacht werden, dass der Ausfall von Mk u.U. die Gültigkeit der Abstandsbedingung (EW8C2N) (siehe unten) für die von Mk ausgehende Abschätzung verletzen kann, so dass man nicht mehr sicher sein kann, ob die letzte von Mk ausgehende Flasche tatsächlich auf ein laufendes MN trifft - auch dann nicht, wenn (EW8C2N) erfüllt war für den Eintritt des Ausfalls von M1. Ein update der Voraussage gemäß (EW8N-V) kann also nur stattfinden, wenn (EW8C2N) für den neuen Aggregatfehler erfüllt bleibt, andernfalls erlischt die Möglichkeit einer Vorhersage vom Typ (EW8N-V) mit dem Eintreten des neuen Aggregatfehlers. Umgekehrt ist es aber auch so, dass die neue Vorhersage selbst dann gültig ist, wenn (EW8C2N) nicht für M1 erfüllt war, es nun aber für Mk ist.

Die andere Möglichkeit ist, dass der als Konsequenz des Aggregatfehlers von Mk vorhergesagte früheste Stillstandszeitpunkt von MN später liegt als der auf Basis des Aggregatfehlers von M1 vorhergesagte. Auch in diesem Fall wird man die bisherige Voraussage überschreiben wollen, sofern (EW8C2N) für den Aggregatfehler von Mk gültig ist. Allerdings ist das nur sicher möglich, wenn die letzte Flasche vor Eintritt des Stillstands von M1 noch nicht bei Mk vorbeigekommen ist. Das ist garantiert, wenn der Aggregatfehler von Mk nicht später eintritt als

$$t_k^{(\text{Beginn des angehaltenen Ausstoßes})} - t_1^{(\text{Beginn des angehaltenen Ausstoßes})} \leq$$
$$\sum_{i=1}^{k-1} \Delta t^{(i,i+1)}(\text{kein Rückstau})$$
$$(\text{MkM1cond}),$$

weil dann die letzte Flasche vor Eintritt des Stillstands von M1 auf keinen Fall schon bei Mk angekommen sein kann. Ansonsten muss man bei der auf dem Aggregatfehler vor M1 basierenden konservativeren Vorhersage bleiben. Zusätzlich ist ein Überschreiben oder Aufrechterhalten der auf (EW8N-V) basierenden Vorhersage nur dann möglich, wenn besagte Bedingung (EW8C2N) tatsächlich gültig ist für den Aggregatfehler von Mk. Wenn das nicht der Fall ist, erlischt wiederum mit dem Eintritt des Aggregatfehlers von Mk die Möglichkeit einer Vorhersage vom Typ (EW8N-V). Die obenstehenden Betrachtungen können analog fortgesetzt werden für jeden noch späteren Aggregatfehler, der bei einem hinter Mk liegenden Aggregat auftritt (ansonsten stört er die Gültigkeit der bisherigen Vorhersage nicht). Die Rolle von M1 wird dann von Mk übernommen usw.

Eine nicht durch die obigen Betrachtungen abgedeckte Auswirkung auf die Reisezeit tritt nur ein, wenn ein Aggregat bereits steht bei Eintreffen dieser Flasche am Stau vor dem Aggregat. Es muss aber immer die (EW8N-V) zugrundeliegende Annahme gelten, dass die letzte Flasche vor Beginn des aktuellen Stillstands von M1 auf ein laufendes MN treffen soll. Diese letzte Flasche kommt dann aber gar nicht durch zu MN, bevor nicht der Stillstand von M1 beendet ist und wieder weitere Flaschen am fraglichen Aggregat eintreffen, die sich dann nahtlos an die letzte Flasche vor Beginn des aktuellen Stillstands von M1 anschließen. Dann kann diese aber nicht mehr Verursacher eines Stillstands sein. Somit ist unter der genannten Annahme das Szenario eines stehenden Aggregats zwischen M1 und MN ausgeschlossen, der aktuelle Stillstand von M1 kann nur dann Verursacher eines Stillstands von MN sein, wenn die letzte Flasche vor Beginn dieses Stillstands nicht aufgehalten wird durch den Stillstand eines Aggregats zwischen M1 und MN.

Mit den vorstehenden Überlegungen wird die eingangs zur Herleitung der bestimmenden Beziehungen der Frühwarn-Funktion gemachte Einschränkung aufgehoben, dass im Zeitraum zwischen dem Eintreffen der ersten Flasche nach Ende des Vorgängerstillstands von M1 und der letzten Flasche vor dem Eintreten des aktuellen Stillstands von M1 kein Eigenfehler eines Aggregats zwischen M1 und MN auftreten soll.

(EW8N-V) bzw. (EW8N-I) können noch etwas erweitert werden: Da diesen Ungleichungen eine konservative worst case Betrachtung zugrunde liegt, kann man die Betrachtung wiederholen ("update"), sobald das Aggregat M2 tatsächlich in den Materialmangel-Stillstand gegangen ist (was i.a. später passieren wird als unter der worst case Annahme). Die Betrachtung beginnt dann effektiv bei $i = 2$. Analog kann man die Betrachtung wiederholen bei Eintreten des Stillstands von M3 usw. Diese updates beziehen sich natürlich auf eine zunehmend verkürzte Rest-Vorwarnzeit und man darf für die Stillstandsprävention nicht einfach abwarten, bis die entsprechenden Stillstände eintreten. Dazu mehr im Absatz zur Stillstandsprävention.

Allerdings gibt es hier noch eine Feinheit zu beachten. Im Allgemeinen unterliegt M2 einer Serie von Materialmangel - Stillständen über die Zeit hinweg und man muss zunächst einmal das richtige Zeitfenster identifizieren, in dem man aus dem Vorliegen bzw. Nicht-Vorliegen eines Materialmangel - Stillstands von M2 Schlüsse ziehen kann für die kausale Propagation des aktuellen Stillstands von M1. Es ist nicht korrekt, dass der nächste in der Zukunft liegende Materialmangel-Stillstand von M2 (vom Zeitpunkt des Eintretens des Stillstands von M1 aus gesehen) zwangsläufig den Effekt des aktuellen Stillstands von M1 widerspiegelt. Sehr wohl aber kann man prüfen mit Hilfe der "normalen" RCA, ob ein eingetretener Materialmangel-Stillstand von M2 kausale Folge sein kann des aktuellen Stillstands von M1. U.U. werden sich zwei oder sogar noch mehr Stillstands-Kandidaten von M1 ergeben (wenn ein "Staccato-Szenario" von zeitlich dicht aufeinanderfolgenden Stillständen von M1 vorliegt).

Umgekehrt könnten zwei aufeinanderfolgende Stillstände von M2 beide die Prüfungsbedingungen der RCA erfüllen für den aktuellen Stillstand von M1. Es ist dann kein (sicherer) update möglich. Ist allerdings der aktuelle Stillstand von M1 der einzige Kandidat, den beobachteten Stillstand von M2 verursacht zu haben, dann muss er auch der sein, der ihn tatsächlich verursacht hat. In diesem Fall kann die obige Erweiterung, also der update, problemlos durchgeführt werden. Falls ein Materialmangel-Stillstand von M2 eindeutig nicht Folge des aktuellen Aggregatfehlers von M1 ist (sondern von einem vorherigen Stillstand von M1 -ob Eigenfehler oder Materialmangel -verursacht worden ist), so gehört er zu einer kausalen Kette, die durch eine frühere Vorwarnung erfasst sein worden muss. Die Abstandsbedingung (EW8C2N) sichert aber, dass bis zum Eintreten des aktuellen Aggregatfehlers von M1 genügend Material eingeflossen ist, dass dieser starvation-Stillstand von M2 und jeder etwaige folgende wieder aufgehoben wird, bevor die letzte Flasche vor dem Eintritt des aktuellen Stillstands von M1 dort ankommt. In diesem Fall ist der Materialmangel-Stillstand von M2 irrelevant für die aktuelle Frühwarn-Analyse.

Man kann absichern, dass die (EW8N-V) bzw. (EW8N-I) zugrundeliegende Annahme laufender Aggregate bei Eintreffen der letzten Flasche von M1 zutrifft, indem man fordert, dass die Zeitspanne

$$\left( t_1^{(\text{Beginn des angehaltenen Ausstoßes})} - t_1^{(\text{Wiederaufnahme des Ausstoßes})(\text{Vorgängerstillstand})} \right)$$

ausreicht, um so viel Volumen in die nachfolgende Aggregatkette zu pumpen, dass in jedem Fall ein etwaig bestehender Stillstand an einem beliebigen Aggregat nach M1 aufgehoben würde. Damit erhält man in Verallgemeinerung von (EW8C2) die Bedingung

$$\left( t_1^{(\text{Beginn des angehaltenen Ausstoßes})} - t'^{(\text{Wiederaufnahme des Ausstoßes})(\text{Vorgänger})}_1 \right) \varphi_N \geq \max_{i=2\ldots N} \{V_{\text{buffer1}\,i}\}$$

$$(\text{EW8C2N})$$

bzw. mit Berücksichtigung statistischer Schwankungen,

$$\left( t_1^{(\text{Beginn des angehaltenen Ausstoßes})} - t'^{(\text{Wiederaufnahme des Ausstoßes})(\text{Vorgänger})}_1 \right) \varphi_{N,\min} \geq \max_{i=2\ldots N} \{V_{\text{buffer1}\,i}\}$$

$$(\text{EW8C2N}')$$

wobei $V_{\text{Puffer\_1}.\,i}$ der minimale zum Wiederanlaufen von Mi notwendige Puffer ist.

Ist (EW8C2N) verletzt, so bedeutet das nicht notwendig, dass (EW8N-V) bzw. (EW8N-I) nicht mehr gilt, aber es könnte nun der Fall eintreten, dass das zwischen Vorgängerstillstand und aktuellem Stillstand von M1 einfließende Volumen nicht mehr ausreicht, um etwaige bei Eintreffen der ersten Flasche nach Ende des Vorgängerstillstands bestehende Aggregatsstillstände aufzuheben.

Wenn (EW8C2N) nicht erfüllt ist, können (nicht müssen) verschiedene Szenarien der Stillstandsverlängerung eintreten. Es könnte die letzte Flasche vor Beginn des aktuellen Stillstands von M1 "hängenbleiben" bei einem Vorgängeraggregat von MN, also gar nicht bei MN ankommen, weil der Mindestpuffer des Vorgängeraggregats nicht erreicht wird. Es könnte aber auch sein, dass die letzte Flasche zwar bei MN ankommt, aber dessen Mindestpuffer nicht erreicht wird. In beiden Fällen kommt es zu einer Verlängerung des Stillstands von MN, wenn MN beim Eintreffen der letzten Flasche vor Beginn des aktuellen Stillstands in den Stillstand ging bzw. schon im Stillstand war. Der ungünstigste Fall (kürzeste Vorwarnzeit) tritt ein, wenn die letzte Flasche bei MN ankommt ohne Wartezeiten im Stau und der Mindestpuffer von MN schon fast erreicht ist. Somit hat man

$$t_N^{(\text{Beginn des Verlängerns des Materialmangels})} \geq$$
$$t_1^{(\text{Beginn des angehaltenen Ausstoßes})} + \sum_{i=1}^{N-2} \Delta t^{(i,i+1)(\text{kein Rückstau})} +$$
$$\Delta t^{(MN-1 \rightarrow \text{Puffer\_1}(MN))}$$

$$(\text{EW4bN})$$

in Verallgemeinerung von (EW4b1), bzw. mit Berücksichtigung statistischer Schwankungen

$$t_N^{(\text{Beginn des Verlängerns des Materialmangels})} \geq$$
$$t_1^{(\text{Beginn des angehaltenen Ausstoßes})} + \sum_{i=1}^{N-2} \Delta t_{\min}^{(i,i+1)(\text{kein Rückstau})} +$$
$$\Delta t_{\min}^{(MN-1 \rightarrow \text{Puffer\_1}(MN))}$$

$$(\text{EW4bN}\,')$$

Hier kann man wiederum auch zulassen, dass nach dem Aggregatfehler von M1 weitere Aggregatfehler von Aggregaten hinter M1 auftreten. Verletzt ein solcher Aggregatfehler seine Abstandsbedingung (EW8C2N), so kann wiederum durch ihn eine Stillstandsverlängerung von MN auftreten, deren frühestes mögliches Auftreten durch die entspr. Version von (EW4bN) bzw. (EW4BN') beschrieben ist.

Auch hier gilt die analoge Bemerkung wie bei (EW4b), dass (EW4bN) bzw. (EW4bN') auch genutzt werden könnte, um die früheste Zeit abzuschätzen, zu der ein Operator bereitstehen sollte, um das Bottleneck-Aggregat nach einem Stillstand wieder anzuwerfen. Sie ist allerdings nur relevant für den Fall der Stillstandsverlängerung, über dessen Vorliegen im Allgemeinen keine Sicherheit besteht zum Zeitpunkt des Stillstandsbeginns von M1.

Abschließend soll noch eine Aufstellung der Verallgemeinerung auf die lineare Kette von (EW8C2.1-pred), (EW4bC) und (EW8C2.1') als hinreichende Bedingungen für die Gültigkeit von (EW4bN) / (EW4bN') geschehen, vgl. Fig. 5. Aus (EW8C2.1-pred) wird

$$t_1^{(\text{Beginn des angehaltenen Ausstoßes})(\text{Vorgängerstillstand})} -$$
$$t_1'^{(\text{Wiederaufnahme des Ausstoßes})(\text{Vor-Vorgänger})} \geq$$
$$\max_{i=2\ldots N} \widetilde{\Delta t}^{(\text{Puffer\_1 Aufbau})(Mi \text{ angehalten})}$$

$$(\text{EW8C2.1-predN})$$

was unmittelbar einsichtig ist, bzw. mit Berücksichtigung statistischer Schwankungen,

$$t_1^{(\text{Beginn des angehaltenen Ausstoßes})(\text{Vorgängerstillstand})} -$$
$$t_1'^{(\text{Wiederaufnahme des Ausstoßes})(\text{Vor-Vorgänger})} \geq$$
$$\max_{i=2\ldots N} \widetilde{\Delta t}_{\max}^{(\text{Puffer\_1 Aufbau})(Mi \text{ angehalten})}$$

$$(\text{EW8C2.1-predN}')$$

Dagegen wird (EW4bC) zu

$$\left(t_1'^{(\text{Wiederaufnahme des Ausstoßes})(\text{Vorgängerstillstand})} - t_1^{(\text{Beginn des angehaltenen Ausstoßes})(\text{Vorgängerstillstand})}\right) \geq$$

$$\sum_{i=2}^{N} \Delta t^{(\text{Reduktion des max Puffers } i)} -$$

$$\sum_{i=1}^{N-1} \Delta t^{(i\,i+1)(\text{kein Rückstau})(\text{max Puffer } i+1 \to \text{M}i+1)}$$

$$(\text{EW4bCN})$$

Zum Beweis beachtet man, dass im ungünstigsten Fall alle Puffer maximal gefüllt sind bei Ankunft der letzten Flasche vor Beginn des Vorgängerstillstands von M1. Dann wird der Puffer vor MN auf Null reduziert sein bei Ankunft dieser letzten Flasche am Eingang von MN, also zur Zeit

$$t_1^{(\text{Beginn des angehaltenen Ausstoßes})(\text{Vorgängerstillstand})} +$$

$$\sum_{i=1}^{N-1} \Delta t^{(i\,i+1)(\text{kein Rückstau})(\text{M}i \to \text{max Puffer } i+1)} + \sum_{i=2}^{N} \Delta t_{\max}^{(\text{Reduktion des max Puffers } i)} \cdot$$

Damit die erste Flasche nach Ende des Vorgängerstillstands von M1 eben dann bei MN ankommt, muss sie um eine Zeit $\sum_{i=1}^{N-1} \Delta t^{(i\,i+1)(\text{kein Rückstau})}$ vorher losgelaufen sein (jedenfalls nicht früher). Durch Differenzbildung der freien Reisezeiten ergibt sich (EW4bCN). Unter Berücksichtigung statistischer Schwankungen hat man entsprechend

$$\left(t_1'^{(\text{Wiederaufnahme des Ausstoßes})(\text{Vorgängerstillstand})} - t_1^{(\text{Beginn des angehaltenen Ausstoßes})(\text{Vorgängerstillstand})}\right) \geq$$

$$\sum_{i=2}^{N} \Delta t_{\max}^{(\text{Reduktion des max Puffers } i)} -$$

$$\sum_{i=1}^{N-1} \Delta t_{\min}^{(i\,i+1)(\text{kein Rückstau})(\text{max Puffer } i+1 \to \text{M}i+1)}$$

$$(\text{EW4bCN}')$$

Schließlich verallgemeinert sich (EW8C2.1′) zu

$$t_1^{(\text{Beginn des angehaltenen Ausstoßes})} - t_1'^{(\text{Wiederaufnahme des Ausstoßes})(\text{Vorgängerstillstand})} < \widetilde{\Delta t}_{\min}^{(\text{Puffer\_1 Aufbau})(\text{MN angehalten})}$$

$$(\text{EW8C2.1N}')$$

was wiederum unmittelbar einsichtig ist.

Abschließend sei bemerkt, dass die durch (EW4bN) vorhergesagte "Impact-Zeit" stets früher liegt als die durch (EW8N-V) vorhergesagte, und keine Prävention erlaubt. Damit könnte auch eine vereinfachte Behandlung ohne Benutzung der Gültigkeitsbedingungen (EW8C2.1-pred), (EW4bC) und (EW8C2.1') für (EW4bN) definiert werden wie folgt:

Ist (EW8C2N) nicht erfüllt, besteht das Risiko, dass eine Stillstandsverlängerung von MN eintritt statt eines neuen Stillstands und es werden beide "Impact-Zeiten" ausgegeben.

II) Stillstandsprävention

Eine Stillstandsprävention ist nur in dem Fall möglich, wo MN nicht steht bei Ankunft der letzten Flasche vor Beginn des aktuellen Stillstands von M1.

Anschließend an die Herleitung von (EW8N-V) kann folgende Überlegung angestellt werden: Die kürzeste Reisedauer für eine Flasche, die nach Ende des aktuellen Stillstands von M1 losläuft, ist offensichtlich

$$\Delta t^{(M1 \to MN\,\min)} = \sum_{i=1}^{N-1} \Delta t^{(i,i+1)\text{(kein Rückstau)}}$$

$$\text{(M1MNmin)}$$

Andererseits kann diese kürzeste Reisedauer auch nur dann verlängert werden, wenn die Flasche irgendwo zwischen M1 und MN auf einen Stau trifft. Das Stauende entspricht dann notwendigerweise der letzten Flasche vor Beginn des aktuellen Stillstands von M1. Dann aber hat die erste Flasche nach Ende des aktuellen Stillstands bereits die letzte Flasche vor Beginn des aktuellen Stillstands eingeholt. Das heißt, wenn die erste Flasche bei M1 losläuft zu einem spätesten Zeitpunkt

$$t_1^{(\text{Letzte Eingriffsmöglichkeit})}$$
$$= t_1^{(\text{Beginn des angehaltenen Ausstoßes})}$$
$$+ \min\left\{\Delta t^{(\text{min Puffer})(M2-M}N), \left(t_1^{(\text{Beginn des angehaltenen Ausstoßes})}\right.\right.$$
$$- t'_1{}^{(\text{Wiederaufnahme des Ausstoßes})(\text{Vorgängerstillstand})}\right)(\varphi_1/\varphi_N$$
$$\left. - 1\right)\right\}$$

$$\text{(EW9N-V)}$$

dann kommt sie entweder noch gleichzeitig an bei MN mit der letzten Flasche vor Beginn des aktuellen Stillstands von M1, oder sie braucht nur deswegen länger, weil sie die letzte Flasche schon vorher eingeholt hat. Die Beziehung (EW9N-V) verallgemeinert (EW9) im selben Sinne, wie (EW8N-V) die Beziehung (EW8N) verallgemeinert. Sie unterscheidet sich von (EW8N-V) nur um den Term $\sum_{i=1}^{N-1} \Delta t^{(i,i+1)\text{(kein Rückstau)}}$, der den nicht zur Verhinderung nutzbaren Teil der Vorwarnzeit beschreibt. Mit Berücksichtigung statistischer Schwankungen hat man entsprechend

$$t_1^{(\text{Letzte Eingriffsmöglichkeit})} = t_1^{(\text{Beginn des angehaltenen Ausstoßes})} +$$
$$\min\left\{\Delta t_{\min}^{(\text{min buffer})(M2-M}N), \left(t_1^{(\text{Beginn des angehaltenen Ausstoßes})} - \right.\right.$$
$$t'_1{}^{(\text{Wiederaufnahme des Ausstoßes})(\text{Vorgängerstillstand})}\right)(\varphi_1/\varphi_N - 1)_{\min}\right\}$$

$$\text{(EW9N-V')}$$

Die Integralform (EW8N-I) übersetzt sich entsprechend in

$$t_N^{(\text{Beginn des Materialmangels})} -$$
$$t'_1{}^{(\text{Wiederaufnahmme des Ausstoßes})(\text{Vorgänger-Stillstand})} \geq$$
$$+ \frac{1}{\varphi_N}\left\{V_1^{(\text{Anlaufphase})}\left(t_1^{(\text{Beginn des angehaltenen Ausstoßes})} - \right.\right.$$
$$t'_1{}^{(\text{Wiederaufnahme des Ausstoßes})(\text{Vorgänger-Stillstand})}\right)\right\}$$
$$\text{(EW9N-I)}$$

mit der offensichtlichen Variante unter Einbeziehung statistischer Schwankungen.
Die längste Vorwarnzeit, für die die Stillstandsprävention noch garantiert werden kann, ist also gegeben durch

$$t_1^{(\text{Letzte Eingriffsmöglichkeit})} - t_1^{(\text{Beginn des angehaltenen Ausstoßes})}$$

gemäb der obigen Formel.

(EW9N) lässt sich im Lichte von (EW8N-I) verallgemeinern zu (EW9N-I) :

$$t_N^{(\text{Beginn des Materialmangels})} - t_1^{(\text{Beginn des angehaltenen Ausstoßes})} \geq$$
$$\frac{1}{\varphi_N} \Big\{ V_1^{(\text{Anlaufphase})} \Big( t_1^{(\text{Beginn des angehaltenen Ausstoßes})} -$$
$$t'_1^{(\text{Wiederaufnahme des Ausstoßes})(\text{Vorgängerstillstand})} \Big) -$$
$$\Big( t_1^{(\text{Beginn des angehaltenen Ausstoßes})} -$$
$$t'_1^{(\text{Wiederaufnahme des Ausstoßes})(\text{Vorgängerstillstand})} \Big) \varphi_N \Big\}$$

$$(\text{EW9N-I})$$

III) Fall der Eigenstörung eines Aggregats M1 stromabwärts des Aggregats MN

Im Vorhergehenden wurde die Stillstandsvorhersage bzw. - prävention für den Fall eines Materialmangels beim (Haupt- bzw. Bottleneck-)Aggregat MN als Folge einer Eigenstörung eines stromaufwärts (upstream) gelegenen Aggregats M1 erläutert. In analoger Weise kann auch der Fall einer Eigenstörung eines stromabwärts (downstream) des (Haupt- bzw. Bottleneck-)Aggregats MN gelegenen Aggregat M1 behandelt werden. Mithilfe der nachfolgenden Abbildungstabelle sowie Gleichungen kann ermittelt werden, wann die Eigenstörung des stromabwärts gelegenen Aggregats M1 zu einer Materialflussblockade bei dem Aggregat MN, d.h. zu einem Stillstand desselben wegen Materialrückstaus, führt (Stillstandsvorhersage) bzw. es wird der letztmögliche Zeitpunkt für einen Eingriff bei dem stromabwärts gelegenen Aggregat M1 zur Verhinderung des Stillstands bei dem Aggregat MN ermittelt.
Anstatt einer systematischen erneuten Herleitung der Formeln werden diese erhalten aus den upstream-Formeln mit Hilfe einfacher Übersetzungstabellen. Die erste Beziehung ist (EW8N-I),

$$t_N^{(\text{Beginn des Materialmangels})} - t_1^{(\text{Beginn des angehaltenen Ausstoßes})} \geq$$
$$\sum_{i=1}^{N-1} \Delta t^{(i,i+1)(\text{kein Rückstau})} +$$
$$\int_{t'_1^{(\text{Wiederaufnahme des Ausstoßes})(\text{Vorgängerstillstand})}}^{t_1^{(\text{Beginn des angehaltenen Ausstoßes})}} \frac{\varphi_1(t) - \varphi_N}{\varphi_N} dt$$

$$(\text{EW8N-I})$$

Mit Hilfe der Abbildungstabelle:

| Nr. | Upstream Größe | Downstream Größe |
|---|---|---|
| 1 | $t_N^{(\text{Beginn des Materialmangels})}$ | $t_N^{(\text{Beginn der Materialflussblockade})}$ |
| 2 | $t_1^{(\text{Beginn des angehaltenen Ausstoßes})}$ | $t_1^{(\text{Beginn des angehaltenen Zuflusses})}$ |
| 3 | $t'_1^{(\text{Wiederaufnahme des Ausstoßes})(\text{Vorgängerstillstand})}$ | $t'_1^{(\text{Wiederaufnahme des Zuflusses})(\text{Vorgängerstillstand})}$ |
| 4 | $\Delta t^{(i,i+1)(\text{kein Rückstau})}$ | $\Delta t^{(i,i+1)(\text{Ausbreitung durch max Rückstau hindurch})}$ |
| 5 | $\varphi_1(t)$ (t) | $\varphi_1(t)$ (t) |
| 6 | $\varphi_N$ | $\varphi_N$ |
| 7 | $\Delta t^{(\text{min Puffer})(M2\text{-}MN)}$ | $\Delta t^{(\text{min freie Strecke})(M2\text{-}MN)}$ |
| 8 | $\Delta t^{(MN\text{-}1, MN)(\text{kein Rückstau})(MN\text{-}1 \rightarrow \text{Puffer1})}$ | $\Delta t^{(MN, MN\text{-}1)(\text{Ausbreitung durch Rückstau hindurch})(MN \rightarrow \text{Marke min freie Strecke})}$ |
| 9 | $V_{\text{Puffer1 } i}$ | $V_{\text{freie Strecke1 } i}$ |

(fortgesetzt)

| Nr. | Upstream Größe | Downstream Größe |
|---|---|---|
| 10 | $\widetilde{\Delta t}^{(\text{Puffer1 Aufbau})(Mi\ \text{angehalten})}$ | $\widetilde{\Delta t}^{(\text{freie Strecke1 Aufbau})(Mi\ \text{angehalten})}$ |
| 11 | $\Delta t^{(\text{Reduktion des max Puffer } i)}$ | $\Delta t^{(\text{Aufbau des max Puffer } i)}$ |
| 12 | $\Delta t^{(i\,i+1)(\text{kein Rückstau})(\text{max Puffer } i+1\text{-}Mi+1)}$ | $\Delta t^{(i\,i+1)(\text{Ausbreitung durch max Rückstau vor } Mi+1)}$ |
| 13 | $V_1^{(\text{Anlaufphase})}(t)$ | $V_1^{(\text{Anlaufphase})}(t)$ |

**Kommentar zu den entsprechenden Nr. der Abbildungstabelle**

4 Maximum tailback (max tailback), d.h. maximaler Rückstau, entspricht der "Abschaltmarke" S1, bei deren Überschreitung Aggregat Mi wegen tailback (Rückstau) insbesondere von der Steuereinrichtung 13 abgeschaltet wird.

5 Im downstream-Fall bedeutet $\varphi_1(t)$ genau genommen den input (Zufluss)-Durchsatz (upstream-Fall: output (Ausstoß)-Durchsatz). Die beiden sollten allerdings i.w. numerisch gleich sein, nur die Zeitpunkte des Einsetzens etwas verschieden.

6 Siehe oben, mit vertauschten Rollen von Zufluss und Ausstoß.

7 $\Delta t^{(\text{min Puffer})(M2\text{-}MN)}$ ist die Verzögerungszeit gegenüber der freien Reisezeit einer Flasche von M1 bis MN, die durch das Vorhandensein gewisser angenommener Minimalpuffer vor M2...MN verursacht wird. Entsprechend ist $\Delta t^{(\text{min freie Strecke})(M2\text{-}MN)}$ die Verzögerungszeit in der Propagation bzw. Ausbreitung des Stillstands von M1 bis MN durch bestehende Puffer hindurch, wenn bekannt ist, dass an jedem Stauende vor Mi+1 eine gewisse freie Strecke ohne Stau bis zum Ausgang von Mi vorhanden ist. Die Differenz der Zeiten für den Aufbau des fehlenden Puffers gegenüber der Zeit für die Propagation eines Stillstands durch einen bestehenden Puffer gleicher Länge ergibt die Differenz $\Delta t^{(\text{min freie Strecke})(Mi\text{-}Mi+1)}$.

8 Die Downstream-Verzögerungszeit ist die Zeit, die es braucht, bis sich der Effekt des Stillstands von MN ausgebreitet hat Richtung MN-1 bis zur Marke, die der minimal notwendigen freien Strecke auf dem Band für das Wiederanlaufen von MN-1 entspricht.

9 $V_{\text{freie strecke1 } i}$ ist das der o.g. minimalen freien Strecke entsprechende Volumen.

10 Zeit zum Freiräumen der minimalen freien Wegstrecke durch Abzug seitens Mi-1 (nächstfolgendes Aggregat in der gewählten Zählweise, wo MN das Bottleneck-Aggregat ist) bei stehendem Mi. Die Zeit wird gezählt ab dem Moment, wo die erste Flasche von der entsprechenden Marke losläuft.

11 Zeit für den Aufbau des maximalen möglichen Puffers vor Mi ohne Abzug von Flaschen durch das Aggregat Mi+1.

12 Zeit für die Propagation des Effekts eines Stillstands von Mi+1 durch den maximalen Stau vor Mi+1.

13 Während der Ramp Up- bzw. Anlaufphase von M1 eingezogenes Volumen bis zur Zeit t nach dem Anlaufen.

erhält man somit

$$t_N^{(\text{Beginn der Materialflussblockade})} - t_1^{(\text{Beginn des angehaltenen Zuflusses})} \geq$$
$$\sum_{i=1}^{N-1} \Delta t^{(i\,i+1)(\text{Ausbreitung durch max Rückstau hindurch})} +$$
$$\int_{t'_1{}^{(\text{Wiederaufnahme des Zuflusses})(\text{Vorgängerstillstand})}}^{t_1^{(\text{Beginn des angehaltenen Zuflusses})}} \frac{\varphi_1(t) - \varphi_N}{\varphi_N} dt$$

(EW8N-I-Downstream)

Ähnlich ergibt sich

$$t_N^{(\text{Beginn der Materialflussblockade})} - t_1^{(\text{Beginn des angehaltenen Zuflusses})} \geq$$

$$\sum_{i=1}^{N-1} \Delta t^{(i\,i+1)(\text{Ausbreitung durch max Rückstau hindurch})} +$$

$$\min\left\{\Delta t^{(\text{min freie Strecke})(M2-M}N)}, \left(t_1^{(\text{Beginn des angehaltenen Zuflusses})} - \right.\right.$$

$$\left.\left. t'_1^{(\text{Wiederaufnahme des Zuflusses})(\text{Vorgängerstillstand})}\right)(\varphi_1/\varphi_N - 1)\right\}$$

$$(\text{EW8N-V-Downstream})$$

Für die Stillstandsverlängerung hat man

$$t_N^{(\text{Beginn des Verlängerns der Materialflussblockade})} \geq$$

$$t_1^{(\text{Beginn des angehaltenen Zuflusses})} +$$

$$\sum_{i=1}^{N-2} \Delta t^{(i\,i+1)(\text{Ausbreitung durch max Rückstau hindurch})} +$$

$$\Delta t^{(\text{M}N,\ \text{M}N-1)(\text{Ausbreitung durch Rückstau hindurch})(\text{M}N \rightarrow \text{Marke min freie Strecke})}$$

$$(\text{EW4bN-Downstream})$$

Die Abstandsbedingungen für die Anwendbarkeit von (EW8N-V-Downstream) oder (EW8N-I-Downstream) ergeben sich zu

$$\left(t_1^{(\text{Beginn des angehaltenen Zuflusses})} - \right.$$

$$\left. t'_1^{(\text{Wiederaufnahme des Zuflusses})(\text{Vorgängerstillstand})}\right)\varphi_N \geq$$

$$\max_{i=2\ldots N}\left\{V_{\text{freie Strecke 1}\,i}\right\}$$

$$(\text{EW8C2N-Downstream})$$

Die Abstandsbedingungen für (EW4bN-Downstream) sind mit den Definitionen in der obigen Abbildungstabelle

$$t_1^{(\text{Beginn des angehaltenen Zuflusses})(\text{Vorgängerstillstand})} - $$

$$t'_1^{(\text{Wiederaufnahme des Zuflusses})(\text{Vor-Vorgänger})} \geq$$

$$\max_{i=2\ldots N} \widetilde{\Delta t}^{(\text{freie Strecke 1 Aufbau})(\text{M}i\ \text{angehalten})}$$

$$(\text{EW8C2.1-predN-Downstream})$$

$$\left( t'^{(\text{Wiederaufnahme des Zuflusses})(\text{Vorgängerstillstand})}_1 - \right.$$
$$\left. t^{(\text{Beginn des angehaltenen Zuflusses})(\text{Vorgängerstillstand})}_1 \right) \geq$$
$$\sum^N_{i=2} \Delta t^{(\text{Aufbau max Puffer } i)} -$$
$$\sum^{N-1}_{i=1} \Delta t^{(i\, i+1)(\text{Ausbreitung durch max Rückstau vor Mi+1 hindurch})}$$

$$(\text{EW4bCN-Downstream})$$

$$t^{(\text{Beginn des angehaltenen Zuflusses})}_1 -$$
$$t'^{(\text{Wiederaufnahme des Zuflusses})(\text{Vorgängerstillstand})}_1 <$$
$$\widetilde{\Delta t}^{(\text{freie Strecke1 Aufbau})(\text{M}N \text{ angehalten})}$$

$$(\text{EW8C2.1N-Downstream})$$

Das Pendant zu (EW8N-I-Downstream) oder (EW8N-V-Downstream) für die Zeit, die zur Verhinderung eines Stillstands minimal zur Verfügung steht, ist

$$t^{(\text{Beginn der Materialflussblockade})}_N -$$
$$t'^{(\text{Wiederaufnahme des Zuflusses})(\text{Vorgängerstillstand})}_1 \geq$$
$$+ \frac{1}{\varphi_N} \left\{ V^{(\text{Anlaufphase})}_1 \left( t^{(\text{Beginn des angehaltenen Zuflusses})}_1 - \right. \right.$$
$$\left. \left. t'^{(\text{Wiederaufnahme des Zuflusses})(\text{Vorgängerstillstand})}_1 \right) \right\}$$

$$(\text{EW9N-I-Downstream})$$

wobei $V^{(\text{Anlaufphase})}_1 \left( t^{(\text{Beginn des angehaltenen Zuflusses})}_1 - \right.$
$t'^{(\text{Wiederaufnahme des Zuflusses})(\text{Vorgängerstillstand})}_1 \left. \right)$ das von M1 während der Anlaufphase eingezogene Volumen ist,
bzw.

$$t^{(\text{Letzte Eingriffsmöglichkeit})}_1 = t^{(\text{Beginn des angehaltenen Zuflusses})}_1 +$$
$$\min \left\{ \Delta t^{(\text{min freie Strecke})(\text{M2}-\text{M}N)}, \left( t^{(\text{Beginn des angehaltenen Zuflusses})}_1 - \right. \right.$$
$$\left. \left. t'^{(\text{Wiederaufnahme des Zuflusses})(\text{Vorgänger})}_1 \right) (\varphi_1/\varphi_N - 1) \right\}$$

$$(\text{EW9N-V-Downstream})$$

Dabei ist $\Delta t^{(\text{min freie Strecke})(\text{M2-M}N)}$ die Verzögerungszeit in der Ausbreitung bzw. Propagation des Stillstands von M1 bis MN durch bestehende Puffer hindurch, wenn bekannt ist, dass an jedem Stauende vor Mi+1 eine gewisse freie Strecke ohne Stau bis zum Ausgang von Mi vorhanden ist. Die Differenz der Zeiten für den Aufbau des fehlenden Puffers gegenüber der Zeit für die Propagation eines Stillstands durch einen bestehenden Puffer gleicher Länge ergibt

die Differenz $\Delta t^{(min\ freie\ Strecke)(Mi-Mi+1)}$.

Obwohl die vorliegende Erfindung anhand von Ausführungsbeispielen beschrieben wurde, ist sie vielfältig modifizierbar.

**Patentansprüche**

1. Verfahren zur Vorhersage eines Stillstands eines Aggregats MN von mehreren Aggregaten M1 - MN, wobei N ≥ 2, einer Produktionsanlage (10), insbesondere Abfüllanlage in der Lebensmittelindustrie, mit durch die Aggregate M1 - MN geförderten Materialeinheiten (12), insbesondere Flaschen, mit den Schritten:

   a) Feststellen (S401) einer Eigenstörung eines Aggregats M1, und

   b) Ermitteln (S402) des Zeitpunkts eines Eintretens $(t_N^{(Beginn\ des\ Materialmangels)}$, $t_N^{(Beginn\ der\ Materialflussblockade)})$ oder eines Verlängerns $(t_N^{(Beginn\ des\ Verlängerns\ des\ Materialmangels)}$, $t_N^{(Beginn\ des\ Verlängerns\ der\ Materialflussblockade)})$ eines Stillstands des Aggregats MN aufgrund eines Mangels an Materialeinheiten (12) oder einer Materialflussblockade als Folge der Eigenstörung des Aggregats M1.

2. Verfahren nach Anspruch 1,
   **dadurch gekennzeichnet, dass** der Zeitpunkt $(t_N^{(Beginn\ des\ Materialmangels)}$, $t_N^{(Beginn\ der\ Materialflussblockade)})$ für das Eintreten des Stillstands des Aggregats MN in Abhängigkeit einer Durchsatzrate ($\varphi_1, \varphi_1(t)$) von Materialeinheiten (12) des Aggregats M1 im Verhältnis zu einer Durchsatzrate ($\varphi_N$) von Materialeinheiten (12) des Aggregats MN bestimmt wird.

3. Verfahren nach Anspruch 2,
   **dadurch gekennzeichnet,**
   **dass** die Durchsatzrate ($\varphi_1, \varphi_1(t)$) des Aggregats M1 und/oder die Durchsatzrate ($\varphi_N$) des Aggregats MN vor Schritt a) bestimmt wird.

4. Verfahren nach Anspruch 2 oder 3,
   **dadurch gekennzeichnet,**
   **dass** die Durchsatzrate ($\varphi_1, \varphi_1(t)$) des Aggregats M1 und/oder die Durchsatzrate ($\varphi_N$) des Aggregats MN als Stammdatum oder Stammdaten, insbesondere auf einem Datenspeicher (131), bereitgestellt wird.

5. Verfahren nach einem der Ansprüche 1 - 4,
   **dadurch gekennzeichnet,**
   **dass** der Zeitpunkt $(t_N^{(Beginn\ des\ Materialmangels)})$ für das Eintreten des Stillstands des Aggregats MN wie folgt ermittelt wird:

$$t_N^{(\text{Beginn des Materialmangels})} - t_1^{(\text{Beginn des angehaltenen Ausstoßes})}$$

$$\geq \sum_{i=1}^{N-1} \Delta t^{(i,i+1)(\text{kein Rückstau})}$$

$$+ \frac{1}{\varphi_N}\Big\{ V_1^{(\text{Anlaufphase})}\Big( t_1^{(\text{Beginn des angehaltenen Ausstoßes})}$$

$$- t'^{(\text{Wiederaufnahme des Ausstoßes})(\text{Vorgängerstillstand})}_1 \Big)$$

$$- \Big( t_1^{(\text{Beginn des angehaltenen Ausstoßes})}$$

$$- t'^{(\text{Wiederaufnahme des Ausstoßes})(\text{Vorgängerstillstand})}_1 \Big) \varphi_N \Big\}$$

$$(\text{EW8N-I})$$

wobei:

des angehaltenen Ausstoßes) : der Zeitpunkt des angehaltenen Ausstoßes von Materialeinheiten (12) aufgrund des aktuellen Stillstands beim Aggregat M1 ist,

$t'^{(\text{Wiederaufnahme des Ausstoßes})(\text{Vorgängerstillstand})}_1$ : der Zeitpunkt ist, zu dem das Aggregat M1 den Ausstoß von Materialeinheiten (12) wiederaufnimmt nach einem dem aktuellen Stillstand vorausgegangenen Stillstand (Vorgängerstillstand),

i: ein Zähler ist, der die betrachteten Aggregate M1 - MN in Richtung des Materialstroms durchzählt,

$\Delta t^{(i,i+1)(\text{kein Rückstau})}$: die Reisezeit einer Materialeinheit (12) von einem Aggregat Mi zum Aggregat Mi+1 ohne Rückstau ist, $V_1^{(\text{Anlaufphase})}\Big( t_1^{(\text{Beginn des angehaltenen Ausstoßes})} -$

$t'^{(\text{Wiederaufnahme des Ausstoßes})(\text{Vorgängerstillstand})}_1 \Big) :=$

$\int_{t'^{(\text{Wiederaufnahme des Ausstoßes})(\text{Vorgängerstillstand})}_1}^{t_1^{(\text{Beginn des angehaltenen Ausstoßes})}} \varphi_1(t)$ , wobei $\varphi_1(t)$ die Durchsatzrate an Materialeinheiten (12) des Aggregats M1 als Funktion der Zeit ist, und

$\varphi_N$: die Durchsatzrate an Materialeinheiten (12) des Aggregats MN ist.

6. Verfahren nach Anspruch 5,
   **dadurch gekennzeichnet,**
   **dass** die Ermittlung gemäß (EW8N-I) wiederholt wird, sobald das Aggregat M2 aufgrund der Eigenstörung des Aggregats M1 einen Materialmangelstillstand aufweist, wobei dann bei der Ermittlung gemäß (EW8N-I) die Aggregate M2 - MN betrachtet werden.

7. Verfahren nach einem der Ansprüche 1 - 6,
   **dadurch gekennzeichnet,**
   **dass** der Zeitpunkt $t_N^{(\text{Beginn des Verlängerns des Materialmangels})}$ für das Verlängerns des Stillstands des Aggregats MN in Abhängigkeit eines Puffers (Puffer_1) vor dem Aggregat MN ermittelt wird, wobei der Puffer (Puffer_1) ein Stau an Materialeinheiten (12) ist, der nach einem Stillstand des Aggregats MN erreicht werden muss, damit dieses wiederanläuft.

8. Verfahren nach einem der Ansprüche 1 - 7,
   **dadurch gekennzeichnet,**
   **dass** der Zeitpunkt $t_N^{(\text{Beginn des Verlängerns des Materialmangels})}$ für das Verlängern des Stillstands des Aggregats MN ermittelt wird als:

$$t_N^{(\text{Beginn des Verlängerns des Materialmangels})}$$

$$\geq t_1^{(\text{Beginn des angehaltenen Ausstoßes})}$$

$$+ \sum_{i=1}^{N-2} \Delta t^{(i,i+1)(\text{kein Rückstau})} + \Delta t^{(MN-1 \rightarrow \text{Puffer\_1(MN)})}$$

$$(\text{EW4bN})$$

wobei:

$t_1^{(\text{Beginn des angehaltenen Ausstoßes})}$: der Zeitpunkt des angehaltenen Ausstoßes von Materialeinheiten (12) aufgrund des aktuellen Stillstands beim Aggregat M1 ist,

i: ein Zähler ist, der die betrachteten Aggregate M1 - MN in Richtung des Materialstroms durchzählt,

$\Delta t^{(i,i+1)(\text{kein Rückstau})}$: die Reisezeit einer Materialeinheit (12) von einem Aggregat Mi zum Aggregat Mi+1 ohne Rückstau ist, und

$\Delta t^{(MN-1 \rightarrow \text{Puffer\_1(MN)})}$: die Reisezeit einer Materialeinheit (12) von dem Aggregat MN-1 bis zum Beginn des Puffers (Puffer_1) vor dem Aggregat MN ist, wobei der Puffer (Puffer_1) ein Stau an Materialeinheiten (12) ist, der nach einem Stillstand des Aggregats MN erreicht werden muss, damit dieses wiederanläuft.

9. Verfahren nach einem der Ansprüche 5 - 8,
   **dadurch gekennzeichnet,**
   **dass** die Ermittlung gemäß (EW8N-I) durchgeführt wird, wenn festgestellt wird, dass

$$\left( t_1^{(\text{Beginn des angehaltenen Ausstoßes})} - t_1'^{(\text{Wiederaufnahme des Ausstoßes})(\text{Vorgänger})} \right) \varphi_N \geq \max_{i=2\ldots N} \left\{ V_{\text{Puffer\_1}\,i} \right\}$$

$$(\text{EW8C2N})$$

wobei:

$t_1^{(\text{Beginn des angehaltenen Ausstoßes})}$: der Zeitpunkt des angehaltenen Ausstoßes von Materialeinheiten (12) aufgrund des aktuellen Stillstands beim Aggregat M1 ist,

$t_1'^{(\text{Wiederaufnahme des Ausstoßes})(\text{Vorgängerstillstand})}$: der Zeitpunkt ist, zu dem das Aggregat M1 den Ausstoß von Materialeinheiten (12) wiederaufnimmt nach einem dem aktuellen Stillstand vorausgegangenen Stillstand (Vorgängerstillstand),

i: ein Zähler ist, der die betrachteten Aggregate M2 - MN in Richtung des Materialstroms durchzählt,

$\varphi_N$: die Durchsatzrate an Materialeinheiten des Aggregats MN ist und

$V_{\text{Puffer\_1}\,i}$: ein Stau an Materialeinheiten (12) vor dem Aggregat Mi ist, der nach einem Stillstand des Aggregats Mi erreicht werden muss, damit dieses wiederanläuft.

10. Verfahren nach Anspruch 8 oder 9,
    **dadurch gekennzeichnet,**
    **dass** die Ermittlung gemäß (EW4bN) durchgeführt wird, wenn festgestellt wird, dass

i) nicht erfüllt ist:

$$\left(t_1^{(\text{Beginn des angehaltenen Ausstoßes})} - t_1'^{(\text{Wiederaufnahme des Ausstoßes})(\text{Vorgängerstillstand})}\right) \varphi_N \geq \max_{i=2\ldots N}\left\{V_{\text{Puffer\_1}\,i}\right\}$$

$$(\text{EW8C2N})$$

wobei:

$t_1^{(\text{Beginn des angehaltenen Ausstoßes})}$: der Zeitpunkt des angehaltenen Ausstoßes von Materialeinheiten (12) aufgrund des aktuellen Stillstands beim Aggregat M1 ist,

$t_1'^{(\text{Wiederaufnahme des Ausstoßes})(\text{Vorgängerstillstand})}$: der Zeitpunkt ist, zu dem das Aggregat M1 den Ausstoß von Materialeinheiten (12) wiederaufnimmt nach einem dem aktuellen Stillstand vorausgegangenen Stillstand (Vorgängerstillstand),

i: ein Zähler ist, der die betrachteten Aggregate M2 - MN in Richtung des Materialstroms durchzählt, und

$V_{\text{Puffer\_1}\,i}$: ein Stau an Materialeinheiten (12) vor dem Aggregat Mi ist, der nach einem Stillstand des Aggregats Mi erreicht werden muss, damit dieses wiederanläuft,

ii) erfüllt ist:

$$t_1^{(\text{Beginn des angehaltenen Ausstoßes})(\text{Vorgängerstillstand})} - t_1'^{(\text{Wiederaufnahme des Ausstoßes})(\text{Vor-Vorgänger})} \geq \max_{i=2\ldots N} \widetilde{\Delta t}^{(\text{Puffer\_1 Aufbau})(\text{M}i \text{ angehalten})}$$

$$(\text{EW8C2-}$$

$$\text{predN})$$

wobei:

$t_1^{(\text{Beginn des angehaltenen Ausstoßes})(\text{Vorgängerstillstand})}$: der Zeitpunkt angehaltenen Ausstoßes von Materialeinheiten (12) nach einem dem aktuellen Stillstand vorausgegangen Stillstand (Vorgängerstillstand) beim Aggregat M1 ist,

$t_1'^{(\text{Wiederaufnahme des Ausstoßes})(\text{Vor-Vorgänger})}$: der Zeitpunkt der Wiederaufnahme des Ausstoßes nach einem dem Vorgängerstillstand vorausgegangenen Stillstand (Vor-Vorgängerstillstand) ist,

i: ein Zähler ist, der die betrachteten Aggregate M2 - MN in Richtung des Materialstroms durchzählt, und

$\widetilde{\Delta t}^{(\text{Puffer\_1 Aufbau})(\text{M}i \text{ angehalten})}$: die für den Aufbau des Puffers (Puffer\_1) vor dem Aggregat Mi benötigte Zeit ist, wobei der Puffer ein Stau an Materialeinheiten (12) vor dem Aggregat Mi ist, der nach einem Stillstand des Aggregats Mi erreicht werden muss, damit dieses wiederanläuft,

und

iii) erfüllt ist:

$$\left( t'^{(\text{Wiederaufnahme des Ausstoßes})(\text{Vorgängerstillstand})}_1 - t^{(\text{Beginn des angehaltenen Ausstoßes})(\text{Vorgängerstillstand})}_1 \right) \geq$$

$$\sum_{i=2}^{N} \Delta t^{(\text{Reduktion des max Puffers } i)} - \sum_{i=1}^{N-1} \Delta t^{(i\,i+1)(\text{kein Rückstau})(\text{max Puffer } i+1\rightarrow Mi+1)}$$

$$(\text{EW4bCN})$$

wobei:

$t'^{(\text{Wiederaufnahme des Ausstoßes})(\text{Vorgängerstillstand})}_1$ : der Zeitpunkt der Wiederaufnahme des Ausstoßes von Materialeinheiten (12) nach einem dem aktuellen Stillstand vorausgegangen Stillstand (Vorgängerstillstand) beim Aggregat M1 ist,

$t^{(\text{Beginn des angehaltenen Ausstoßes})(\text{Vorgängerstillstand})}_1$ : der Zeitpunkt des angehaltenen Ausstoßes von M1 zu Beginn des Vorgängerstillstands ist,

i: ein Zähler ist, der die betrachteten Aggregate M2 - MN in Richtung des Materialstroms durchzählt,

$\Delta t^{(\text{Reduktion des max Puffers } i)}$: die für das vollständige Aufbrauchen des maximalen Puffers vor dem Aggregat Mi benötigte Zeit ist, und

$\Delta t^{(i\,i+1)(\text{kein Ruckstau})(\text{max Puffer } i+1\rightarrow Mi+1)}$ : die Reisezeit ist, die eine Materialeinheit (12) von dem Beginn des maximalen Puffers i+1 vor dem Aggregat Mi+1 bis zu dem Aggregat Mi+1 benötigt.

11. Verfahren nach einem der Ansprüche 1 - 10,
    **dadurch gekennzeichnet,**

    **dass** der letztmögliche Zeitpunkt $\left( t^{(\text{Letzte Eingriffsmöglichkeit})}_1 \right)$ für einen Eingriff bei dem Aggregat M1 zur Verhinderung des Stillstands bei dem Aggregat MN ermittelt wird (S403), wobei der letztmögliche Zeitpunkt $\left( t^{(\text{Letzte Eingriffsmöglichkeit})}_1 \right)$ bevorzugt ermittelt wird gemäß:

$$t^{(\text{Letzte Eingriffsmöglichkeit})}_N - t^{(\text{Beginn des angehaltenen Ausstoßes})}_1 \geq$$

$$\frac{1}{\varphi_N} \left\{ V^{(\text{Anlaufphase})}_1 \left( t^{(\text{Beginn des angehaltenen Ausstoßes})}_1 - t'^{(\text{Wiederaufnahme des Ausstoßes})(\text{Vorgängerstillstand})}_1 \right) - \left( t^{(\text{Beginn des angehaltenen Ausstoßes})}_1 - t'^{(\text{Wiederaufnahme des Ausstoßes})(\text{Vorgängerstillstand})}_1 \right) \varphi_N \right\}$$

$$(\text{EW9N-I})$$

wobei:

$t^{(\text{Beginn des angehaltenen Ausstoßes})}_1$ : der Zeitpunkt des angehaltenen Ausstoßes von Materialeinheiten (12) aufgrund des aktuellen Stillstands beim Aggregat M1 ist,

$t'^{(\text{Wiederaufnahme des Ausstoßes})(\text{Vorgängerstillstand})}_1$ : der Zeitpunkt ist, zu dem das Aggregat M1 den Ausstoß von Materialeinheiten (12) wiederaufnimmt nach einem dem aktuellen Stillstand vorausgegangenen             Stillstand           (Vorgängerstillstand),

$$V_1^{(\text{Anlaufphase})}\left(t_1^{(\text{Beginn des angehaltenen Ausstoßes})} - t'^{(\text{Wiederaufnahme des Ausstoßes})(\text{Vorgängerstillstand})}_1\right) :=$$

$$\int_{t'^{(\text{Wiederaufnahme des Ausstoßes})(\text{Vorgängerstillstand})}_1}^{t_1^{(\text{Beginn des angehaltenen Ausstoßes})}} \varphi_1(t) \, ,$$ wobei $\varphi_1(t)$ die Durchsatzrate an Materialeinheiten (12) des Aggregats M1 als Funktion der Zeit ist, und

$\varphi_N$: die Durchsatzrate an Materialeinheiten (12) des Aggregats MN ist.

**12.** Verfahren nach einem der Ansprüche 1 - 11,
**dadurch gekennzeichnet,**
**dass** in Abhängigkeit des ermittelten Zeitpunkts eines Eintretens

$$\left(t_N^{(\text{Beginn des Materialmangels})}, t_N^{(\text{Beginn der Materialflussblockade})}\right)$$ oder eines Verlängerns

$$\left(t_N^{(\text{Beginn des Verlängerns des Materialmangels})},\right.$$

$$\left. t_N^{(\text{Beginn des Verlängerns der Materialflussblockade})}\right)$$ eines Stillstands ein Alarm ausgelöst und/oder ein Fehlerbehebungsprozess gestartet wird.

**13.** Frühwarneinrichtung (13) zur Vorhersage eines Stillstands eines Aggregats MN von mehreren Aggregaten M1 - MN, wobei N ≥ 2, einer Produktionsanlage (10), insbesondere Abfüllanlage in der Lebensmittelindustrie, mit durch die Aggregate M1 - MN geförderten Materialeinheiten (12), insbesondere Flaschen, mit:

einer Feststell-Einheit (151) zum Feststellen einer Eigenstörung eines Aggregats M1, und
einer Ermittlungs-Einheit (152) zum Ermitteln des Zeitpunkts eines Eintretens

$$\left(t_N^{(\text{Beginn des Materialmangels})}, t_N^{(\text{Beginn der Materialflussblockade})}\right)$$ oder eines Verlängerns

$$\left(t_N^{(\text{Beginn des Verlängerns des Materialmangels})},\right.$$

$$\left. t_N^{(\text{Beginn des Verlängerns der Materialflussblockade})}\right)$$ eines Stillstands des Aggregats MN aufgrund eines Mangels an Materialeinheiten (12) oder einer Materialflussblockade als Folge der Eigenstörung des Aggregats M1.

**14.** Produktionsanlage (10), insbesondere Abfüllanlage in der Lebensmittelindustrie, mit:

mehreren Aggregaten M1 - MN, durch welche Materialeinheiten (12), insbesondere Flaschen, förderbar sind, wobei N ≥ 2, und
einer Frühwarneinrichtung (15) gemäß Anspruch 13.

**15.** Computerprogrammprodukt, welches auf zumindest einer programmgesteuerten Einrichtung die Durchführung des Verfahrens gemäß einem der Ansprüche 1 - 12 veranlasst.

## FIG 1

10

M1    12    16    M2                    MN

13

131

14

15

151

152

## FIG 2

M2    12    16    M3

# FIG 3

| Vor-Vorgänger-<br>stillstand M2 | Ausstoß M2 | Vorgänger-<br>stillstand M2 |
|---|---|---|

(Beginn des angehaltenen
Ausstoßes)  (Vor-Vorgänger)
$t_2$

(Wiederaufnahme des
Ausstoßes)  (Vorgänger)
$t'_2$

(Beginn des angehaltenen
Ausstoßes)  (Vorgänger)
$t_2$

| Ausstoß M2 | Aktueller<br>Stillstand M2 |
|---|---|

→ Zeit

(Wiederaufnahme des Ausstoßes)
$t'_2$

$t_2$  (Beginn des angehaltenen Ausstoßes)

# FIG 4

S401

S402

S403

# FIG 5

```
                              ┌──────────────┐
                              │   EW8C2N     │
                              │  erfüllt ?   │
                              └──────┬───────┘
                                     │ Nein
         Ja                          │
  ┌──────────────┐           ┌──────────────┐
  │  Stillstand  │           │ EW8C2-predN  │
  │ gem. EW8N-I  │           │  erfüllt ?   │
  └──────────────┘           └──────┬───────┘
                                     │ Ja
                              ┌──────────────┐
                              │   EW4bCN     │
                              │  erfüllt ?   │
                              └──────┬───────┘
                                     │ Ja
                              ┌──────────────┐
                              │  Stillstand  │
                              │ gem. EW4bN   │
                              └──────────────┘
```

**Europäisches Patentamt**
**European Patent Office**
**Office européen des brevets**

# EUROPÄISCHER RECHERCHENBERICHT

Nummer der Anmeldung

EP 19 21 4378

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/050071 A1 (NICKOLAOU JAMES N [US] ET AL) 1. März 2007 (2007-03-01) * Absätze [0007] - [0012], [0021] - [0046]; Abbildungen 1-4 * ----- | 1-15 | INV. G05B19/418 |
| X | US 2003/065416 A1 (VOLLMAR GERHARD [DE] ET AL) 3. April 2003 (2003-04-03) * Absätze [0005] - [0007], [0018], [0021] - [0024]; Abbildungen 1,3 * ----- | 1-15 | |
| A | US 2006/052898 A1 (BLUMENFELD DENNIS E [US] ET AL) 9. März 2006 (2006-03-09) * Absätze [0011] - [0014], [0023] - [0042]; Abbildungen 2-4 * ----- | 1-15 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 8. Juni 2020 | Sollazzo, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 4378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2020

| Im Recherchenbericht angeführtes Patentdokument | Datum der Veröffentlichung | Mitglied(er) der Patentfamilie | Datum der Veröffentlichung |
|---|---|---|---|
| US 2007050071 A1 | 01-03-2007 | CN 101034286 A<br>EP 1832948 A2<br>US 2007050071 A1 | 12-09-2007<br>12-09-2007<br>01-03-2007 |
| US 2003065416 A1 | 03-04-2003 | AT 255736 T<br>AU 3659000 A<br>CN 1452732 A<br>DE 50004679 D1<br>EP 1269278 A1<br>US 2003065416 A1<br>WO 0175539 A1 | 15-12-2003<br>15-10-2001<br>29-10-2003<br>15-01-2004<br>02-01-2003<br>03-04-2003<br>11-10-2001 |
| US 2006052898 A1 | 09-03-2006 | KEINE | |

EPO FORM P0461

Für nähere Einzelheiten zu diesem Anhang : siehe Amtsblatt des Europäischen Patentamts, Nr.12/82